(19) **Europäisches Patentamt / European Patent Office / Office européen des brevets**

(11) **EP 4 518 450 A1**

(12) **EUROPEAN PATENT APPLICATION**
published in accordance with Art. 153(4) EPC

(43) Date of publication:
**05.03.2025 Bulletin 2025/10**

(21) Application number: **23796648.6**

(22) Date of filing: **06.04.2023**

(51) International Patent Classification (IPC):
$H04W\ 52/02^{(2009.01)}$    $H04W\ 52/14^{(2009.01)}$
$H04W\ 52/24^{(2009.01)}$    $H04W\ 72/23^{(2023.01)}$
$H04B\ 7/06^{(2006.01)}$    $H04B\ 7/08^{(2006.01)}$
$H04W\ 72/04^{(2023.01)}$    $H04W\ 24/08^{(2009.01)}$

(52) Cooperative Patent Classification (CPC):
**H04B 7/06; H04B 7/08; H04W 24/08; H04W 52/02; H04W 52/14; H04W 52/24; H04W 72/04; H04W 72/23**

(86) International application number:
**PCT/KR2023/004649**

(87) International publication number:
**WO 2023/210999 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.04.2022   KR 20220052007
10.08.2022   KR 20220100225
28.09.2022   KR 20220123809

(71) Applicant: **LG Electronics Inc.**
**Yeongdeungpo-gu**
**Seoul 07336 (KR)**

(72) Inventors:
• **KIM, Seonwook**
**Seoul 06772 (KR)**

• **LEE, Youngdae**
**Seoul 06772 (KR)**
• **KIM, Kijun**
**Seoul 06772 (KR)**
• **AHN, Joonkui**
**Seoul 06772 (KR)**
• **KIM, Jaehyung**
**Seoul 06772 (KR)**
• **YANG, Suckchel**
**Seoul 06772 (KR)**
• **PARK, Haewook**
**Seoul 06772 (KR)**

(74) Representative: **Plasseraud IP**
**104 Rue de Richelieu**
**CS92104**
**75080 Paris Cedex 02 (FR)**

(54) **METHOD FOR MEASURING DOWNLINK SIGNAL AND DEVICE THEREFOR**

(57) Disclosed is a method for measuring channel state information (CSI) by a terminal in a wireless communication system. In particular, the method comprises: receiving first information related to a first transmission power of a CSI-reference signal (CSI-RS); receiving the CSI-RS; and starting measurement of first CSI on the basis of the first transmission power and the CSI-RS, wherein second CSI is measured on the basis of the CSI-RS and a second transmission power, on the basis of receiving second information related to the second transmission power of the CSI-RS that has a different value from the first transmission power.

# FIG. 12

(a)

(b)

(c)

**Description**

**[TECHNICAL FIELD]**

The disclosure relates to a method and apparatus for measuring a downlink (DL) signal, and more particularly, to a method and apparatus for measuring a DL signal, when the transmission power of the DL signal is dynamically changed.

**[BACKGROUND]**

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

**[DISCLOSURE]**

**[Technical Problem]**

An object of the disclosure is to provide a method of measuring downlink signals and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

**[Technical Solution]**

A method of measuring channel state information (CSI) by a user equipment (UE) in a wireless communication system according to an embodiment of the disclosure may include receiving first information related to first transmission power of a channel state information-reference signal (CSI-RS), receiving the CSI-RS, and starting measurement of first CSI based on the first transmission power and the CSI-RS. Based on receiving second information related to second transmission power of the CSI-RS having a different value from the first transmission power, second CSI may be measured based on the CSI-RS and the second transmission power.

The measurement of the first CSI may be ignored based on the measurement of the second CSI.

Further, the second CSI may be measured based on a weighting factor corresponding to the second transmission power.

Further, the second CSI may be transmitted together with a time stamp for a time point when the measurement of the second CSI starts.

Further, the second information may be applied at a time point before the measurement of the first CSI is completed.

Further, the second transmission power may be determined based on the first transmission power and the number of antenna ports turned on by a base station (BS).

A UE for measuring CSI in a wireless communication system according to the disclosure may include at least one transceiver, at least one processor, and at least one memory operably connected to the at least one processor, and storing instructions which when executed, cause the at least one processor to perform operations. The operations may include receiving first information related to first transmission power of a CSI-RS through the at least one transceiver, receiving the CSI-RS through the at least one transceiver, and starting measurement of first CSI based on the first transmission power and the CSI-RS. Based on receiving second information related to second transmission power of the CSI-RS having a different value from the first transmission power, second CSI may be measured based on the CSI-RS and the second transmission power.

The measurement of the first CSI may be ignored based on the measurement of the second CSI.

Further, the second CSI may be measured based on a weighting factor corresponding to the second transmission power.

Further, the second CSI may be transmitted together with a time stamp for a time point when the measurement of the second CSI starts.

Further, the second information may be applied at a time point before the measurement of the first CSI is completed.

Further, the second transmission power may be determined based on the first transmission power and the number of antenna ports turned on by a BS.

An apparatus for measuring CSI in a wireless communication system according to the disclosure may include at least one processor, and at least one memory operably connected to the at least one processor, and storing instructions which when executed, cause the at least one processor to perform operations. The operations may include receiving first information related to first transmission power of a CSI-RS, receiving the CSI-RS, and starting measurement of first CSI based on the first transmission power and the CSI-RS. Based on receiving second information related to second transmission power of the CSI-RS having a different value from the first transmission power, second CSI may be measured based on the CSI-RS and the second transmission power.

A computer-readable storage medium according to the disclosure may include at least one computer program causing at least one processor to perform operations. The operations may include receiving first information related to first transmission power of a CSI-RS, receiving the CSI-RS, and starting measurement of first CSI based on the first transmission power and the CSI-RS. Based on receiving second information related to second transmission power of the CSI-RS having a different value from the first transmission power, second CSI may be measured based on the CSI-RS and the second transmission power.

A method of receiving CSI by a BS in a wireless communication system according to an embodiment of the disclosure may include transmitting first information related to first transmission power of a CSI-RS, transmitting the CSI-RS, transmitting second information related to second transmission power of the CSI-RS having a different value from the first transmission power, and receiving the CSI based on the CSI-RS. The CSI may include measurement information based on the CSI-RS and the second transmission power.

A BS for receiving CSI in a wireless communication system according to the disclosure may include at least one transceiver, at least one processor, and at least one memory operably connected to the at least one processor, and storing instructions which when executed, cause the at least one processor to perform operations. The operations may include transmitting first information related to first transmission power of a CSI-RS through the at least one transceiver, transmitting the CSI-RS through the at least one transceiver;, transmitting second information related to second transmission power of the CSI-RS having a different value from the first transmission power through the at least one transceiver, and receiving the CSI based on the CSI-RS through the at least one transceiver. The CSI may include measurement information based on the CSI-RS and the second transmission power.

**[Advantageous Effects]**

According to the disclosure, the power consumption of a base station (BS) may be reduced by providing a mechanism in which the BS dynamically changes the transmission power of a synchronization signal block (SSB) and/or channel state information-reference signal (CSI-RS) and/or physical downlink shared channel (PDSCH) in consideration of communication states with associated user equipments (UEs), the amount of data, and so on.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

**[BRIEF DESCRIPTION OF THE DRAWINGS]**

FIG. 1 is a diagram illustrating network energy saving.
FIG. 2 is a diagram illustrating analog beamforming in the NR system.
FIG. 3 illustrates exemplary multi-beam transmission of Synchronization Signal Blocks (SSBs).
FIGS. 4 to 8 are diagrams illustrating beam management in an NR system.
FIGS. 9 to 11 are diagrams illustrating overall operation procedures of a user equipment (UE) and a base station (BS) according to an embodiment of the disclosure.
FIG. 12 is a diagram illustrating examples of mapping antenna ports to each CSI-RS resource according to an embodiment of the disclosure.
FIG. 13 illustrates an exemplary communication system applied to the disclosure;
FIG. 14 illustrates an exemplary wireless device applicable to the disclosure; and
FIG. 15 illustrates an exemplary vehicle or autonomous driving vehicle applicable to the disclosure.

**[DETAILED DESCRIPTION]**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

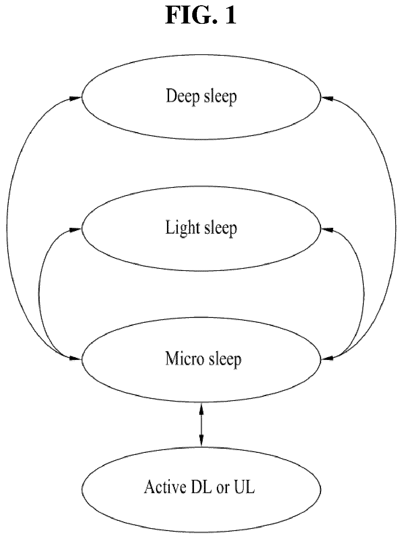

FIG. 1 is a diagram illustrating Network Energy Saving (NES) according to the disclosure.

It has been reported that a New Rat (NR) base station (BS) consumes 3 to 4 times more power than a Long Term Evolution (LTE) BS due to a higher density of installed BSs and use of more antennas/bandwidths/frequency bands in a comparison between the NR system and the LTE system. To solve the problem of the resulting increased operating costs for operators and build an eco-friendly network, a study item was approved to discuss methods of reducing energy consumption of BSs.

In 3GPP RAN WG1, an energy consumption model and simulation methodology for BSs was defined to show that energy consumption gains may be obtained by applying NES technology. Specifically, a sleep state (i.e., a state in which a BS does not perform either of transmission and reception) and an active state (i.e., a state in which the BS performs transmission and/or reception) were defined for BSs, and a transition method for each state was determined, as illustrated in FIG. 1. In addition, a relative power value consumed by a BS in each state, a time and energy required for state transition, and so on were modeled.

The techniques discussed in 3GPP RAN WG1 for NES may be largely classified into four domains (i.e., time/frequency/space/power domains), and the specific techniques for each domain may be summarized as in [Table 1].

[Table 1]

| Time domain techniques | |
|---|---|
| A-1 | Adaptation of common signals and channels |
| A-2 | Dynamic adaptation of UE specific signals and channels |
| A-3 | Wake up of gNB triggered by UE wake up signal |
| A-4 | Adaptation of DTX/DRX |
| A-5 | Adaptation of SSB/SIB1 |
| Frequency domain techniques | |
| B-1 | Multi-carrier energy savings enhancements |

(continued)

| Frequency domain techniques | |
| --- | --- |
| B-2 | Dynamic adaptation of bandwidth part of UE(s) within a carrier |
| B-3 | Dynamic adaptation of bandwidth of active BWP |
| **Spatial domain techniques** | |
| C-1 | Dynamic adaptation of spatial elements |
| C-2 | TRP muting/adaptation in multi-TRP operation |
| **Power domain techniques** | |
| D-1 | Adaptation of transmission power of signals and channels |
| D-2 | Enhancements to assist gNB digital pre-distortion |
| D-3 | Adaptation of transceiver processing algorithm |
| D-4 | PA backoff adaptation |
| D-5 | UE post-distortion |

As time domain NES techniques, methods have been discussed such as controlling on/off of a UE-common signal (e.g., SSB, SIB, paging, and so on) or a UE-specific signal (e.g., CSI-RS), such as A-1, A-2, and/or A-5 in Table 1, transmitting a wake-up signal to wake up a BS in an inactive state, such as A-3 in Table 1, or controlling transmission and reception of a UE according to a discontinuous transmission/discontinuous reception (DTX/DRX) pattern of a BS, such as A-4 in Table 1.

As frequency domain NES techniques, methods have been discussed such as an SCell operating without a synchronization signal block (SSB) in an inter-band CA situation, such as B-1 in Table 1, and switching a bandwidth part (BWP) or controlling the bandwidth of a BWP, such as B-2 and/or B-3 in Table 1.

As spatial domain NES techniques, methods of supporting per-antenna port on/off or per-transmission and reception point (TRP) on/off in a BS and improving associated CSI measurement and reporting, such as C-1 and/or C-2 in Table 1, have been discussed.

As power domain NES techniques, methods have been discussed such as increasing transmission efficiency by dynamically changing the power of downlink (DL) signals (e.g., SSB, CSI-RS, and PDSCH), such as D-1 in Table 1, or maximizing power amplifier (PA) efficiency by applying digital distortion compensation or tone reservation for a BS/UE, such as D-2, D-3, D-4 and/or D-5 in Table 1.

Apart from for the techniques (e.g., A-4, A-5, and B-1) commonly discussed in 3GPP RAN WG1 and 3GPP RAN WG2, the techniques discussed in 3GPP RAN WG2 for NES include a method of accessing NES-cells by NES-capable UEs or existing NR UEs, an efficient handover method for a UE being connected to an NES-cell, and so on.

As a result of the RAN#98-e meeting, the NES work items were approved and the discussion topics in each leading WG are as follows. The RAN WG1 leading items include methods (e.g., C-1 and D-1) of supporting on/off of BS antenna ports or dynamically changing a power offset between a physical downlink shared channel (PDSCH) and a channel state information-reference signal (CSI-RS), and enhancing CSI measurement and reporting. The RAN WG2 leading items include a method (e.g., A-4) of controlling transmission and reception of UEs according to a DTX/DRX pattern of a BS, a method of preventing existing NR UEs from accessing an NES-cell, and a conditional handover (CHO) method considering a source or target cell that performs an NES operation. In addition, the RAN WG3 leading items include a method of exchanging information about active beams between nodes and paging through a limited area. The RAN WG4 leading items include an SCell operating without an SSB in an inter-band CA situation (e.g., B-1).

In the NR system, a massive multiple input multiple output (MIMO) environment in which the number of transmission/reception (Tx/Rx) antennas is significantly increased may be under consideration. That is, as the massive MIMO environment is considered, the number of Tx/Rx antennas may be increased to a few tens or hundreds. The NR system supports communication in an above 6 GHz band, that is, a millimeter frequency band. However, the millimeter frequency band is characterized by the frequency property that a signal is very rapidly attenuated according to a distance due to the use of too high a frequency band. Therefore, in an NR system operating at or above 6 GHz, beamforming (BF) is considered, in which a signal is transmitted with concentrated energy in a specific direction, not omni-directionally, to compensate for rapid propagation attenuation. Accordingly, there is a need for hybrid BF with analog BF and digital BF in combination according to a position to which a BF weight vector/precoding vector is applied, for the purpose of increased performance, flexible resource allocation, and easiness of frequency-wise beam control in the massive MIMO environment.

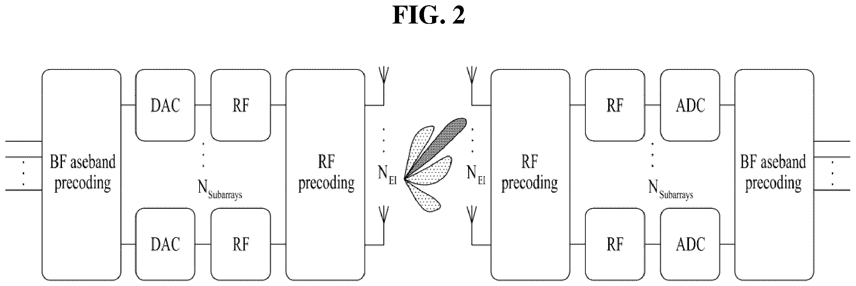

FIG. 2 is a block diagram illustrating an exemplary transmitter and receiver for hybrid BF.

To form a narrow beam in the millimeter frequency band, a BF method is mainly considered, in which a BS or a UE transmits the same signal through multiple antennas by applying appropriate phase differences to the antennas and thus increasing energy only in a specific direction. Such BF methods include digital BF for generating a phase difference for digital baseband signals, analog BF for generating phase differences by using time delays (i.e., cyclic shifts) for modulated analog signals, and hybrid BF with digital BF and analog beamforming in combination. Use of a radio frequency (RF) unit (or transceiver unit (TXRU)) for antenna element to control transmission power and phase control on antenna element basis enables independent BF for each frequency resource. However, installing TXRUs in all of about 100 antenna elements is less feasible in terms of cost. That is, a large number of antennas are required to compensate for rapid propagation attenuation in the millimeter frequency, and digital BF needs as many RF components (e.g., digital-to-analog converters (DACs), mixers, power amplifiers, and linear amplifiers) as the number of antennas. As a consequence, implementation of digital BF in the millimeter frequency band increases the prices of communication devices. Therefore, analog BF or hybrid BF is considered, when a large number of antennas are needed as is the case with the millimeter frequency band. In analog BF, a plurality of antenna elements are mapped to a single TXRU and a beam direction is controlled by an analog phase shifter. Because only one beam direction is generated across a total band in analog BF, frequency-selective BF may not be achieved with analog BF. Hybrid BF is an intermediate form of digital BF and analog BF, using B RF units fewer than Q antenna elements. In hybrid BF, the number of beam directions available for simultaneous transmission is limited to B or less, which depends on how B RF units and Q antenna elements are connected.

Beam alignment

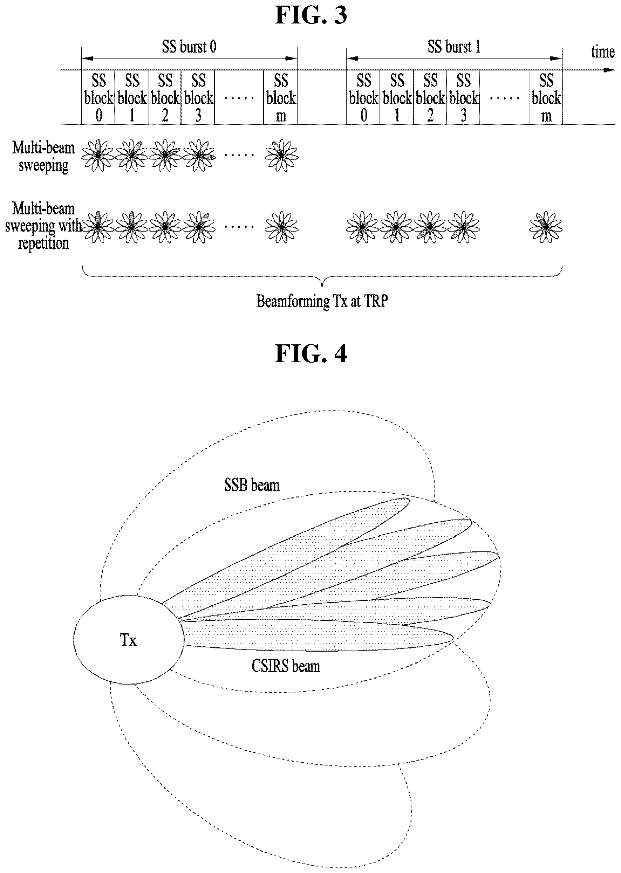

FIG. 3 illustrates exemplary multi-beam transmission of SSBs.

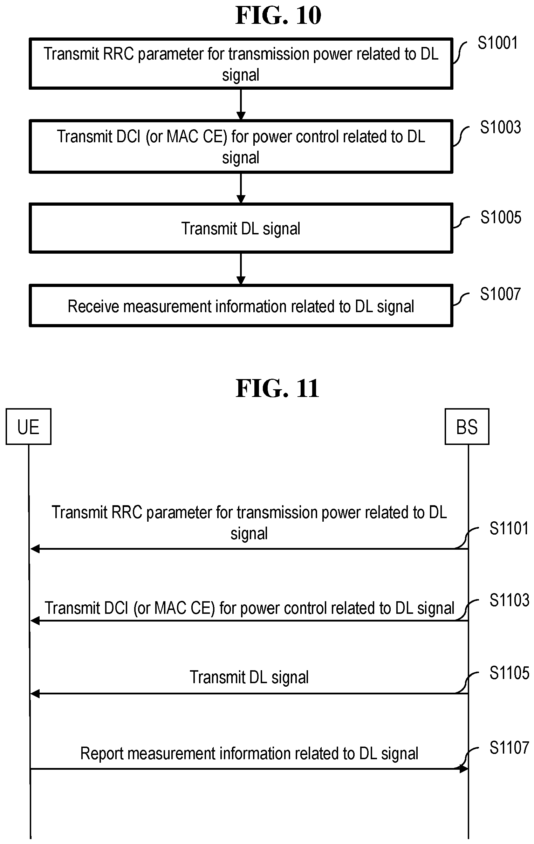

Beam sweeping refers to changing the beam (direction) of a wireless signal over time at a transmission reception point (TRP) (e.g., a BS/cell) (hereinafter, the terms beam and beam direction are interchangeably used). Referring to FIG. 10, an SSB may be transmitted periodically by beam sweeping. In this case, SSB indexes are implicitly linked to SSB beams. An SSB beam may be changed on an SSB (index) basis or on an SS (index) group basis. In the latter, the same SSB beam is maintained in an SSB (index) group. That is, the transmission beam direction of an SSB is repeated for a plurality of successive SSBs. The maximum allowed transmission number L of an SSB in an SSB burst set is 4, 8 or 64 according to the frequency band of a carrier. Accordingly, the maximum number of SSB beams in the SSB burst set may be given according to the frequency band of a carrier as follows.

- For frequency range up to 3 GHz, Max number of beams = 4
- For frequency range from 3GHz to 6 GHz, Max number of beams = 8
- For frequency range from 6 GHz to 52.6 GHz, Max number of beams = 64

 * Without multi-beam transmission, the number of SSB beams is 1.

When the UE attempts initial access to the BS, the UE may align beams with the BS based on an SSB. For example, the UE performs SSB detection and then identifies a best SSB. Subsequently, the UE may transmit an RACH preamble in PRACH resources linked/corresponding to the index (i.e., beam) of the best SSB. The SSB may also be used for beam alignment between the BS and the UE even after the initial access.

**Beam Management (BM)**

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal

- Beam determination: an operation by which the BS or UE selects its Tx/Rx beams

- Beam sweeping: an operation of covering a spatial domain by using Tx and/or Rx beams for a prescribed time interval according to a predetermined method

- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

FIG. 4 is a diagram illustrating exemplary BF using an SSB and a CSI-RS.

Referring to FIG. 4, an SSB beam and a CSI-RS beam may be used for beam measurement. A measurement metric is the RSRP of each resource/block. The SSB may be used for coarse beam measurement, whereas the CSI-RS may be used for fine beam measurement. The SSB may be used for both Tx beam sweeping and Rx beam sweeping. SSB-based Rx beam sweeping may be performed by attempting to receive the SSB for the same SSBRI, while changing an Rx beam across multiple SSB bursts at a UE. One SS burst includes one or more SSBs, and one SS burst set includes one or more SSB bursts.

### 1. DL BM Using SSB

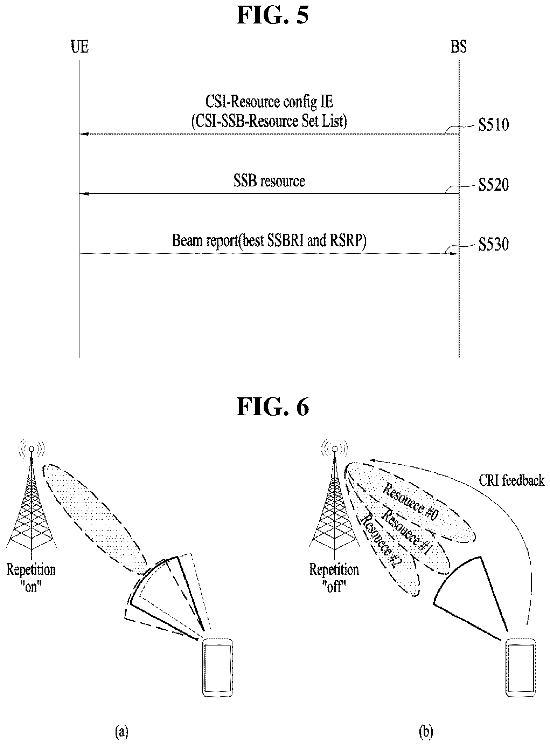

FIG. 5 is a diagram illustrating a signal flow for an exemplary DL BM procedure using an SSB.

An SSB-based beam report is configured during CSI/beam configuration in RRC_CONNECTED mode.

- A UE receives a CSI-ResourceConfig information element (IE) including CSI-SSB-ResourceSetList for SSB resources used for BM from a BS (S510). The RRC parameter, CSI-SSB-ResourceSetList is a list of SSB resources used for BM and reporting in one resource set. The SSB resource set may be configured as {SSBx1, SSBx2, SSBx3, SSBx4, ...}. SSB indexes may range from 0 to 63.
- The UE receives signals in the SSB resources from the BS based on CSI-SSB-ResourceSetList (S520).
- When CSI-RS reportConfig related to an SSBRI and RSRP reporting has been configured, the UE reports a best SSBRI and an RSRP corresponding to the best SSBRI to the BS (S530). For example, when reportQuantity in the CSI-RS reportConfig IE is set to 'ssb-Index-RSRP', the UE reports the best SSBRI and the RSRP corresponding to the best SSBRI to the BS.

When CSI-RS resources are configured in OFDM symbol(s) carrying an SSB and 'QCL-TypeD' is applicable to the CSI-RS resources and the SSB, the UE may assume that a CSI-RS and the SSB are quasi-co-located (QCLed) from the perspective of 'QCL-TypeD'. QCL-TypeD may mean that antenna ports are QCLed from the perspective of spatial Rx parameters. When the UE receives signals from a plurality of DL antenna ports placed in the QCL-TypeD relationship, the UE may apply the same Rx beam to the signals

### 2. DL BM Using CSI-RS

The CSI-RS serves the following purposes: i) when Repetition is configured and TRS_info is not configured for a specific CSI-RS resource set, the CSI-RS is used for BM; ii) when Repetition is not configured and TRS_info is configured for the specific CSI-RS resource set, the CSI-RS is used for a tracking reference signal (TRS); and iii) when either of Repetition or TRS_info is configured for the specific CSI-RS resource set, the CSI-RS is used for CSI acquisition.

When (the RRC parameter) Repetition is set to 'ON', this is related to the Rx beam sweeping process of the UE. In the case where Repetition is set to 'ON', when the UE is configured with NZP-CSI-RS-ResourceSet, the UE may assume that signals in at least one CSI-RS resource within NZP-CSI-RS-ResourceSet are transmitted through the same DL spatial domain filter. That is, the at least one CSI-RS resource within NZP-CSI-RS-ResourceSet is transmitted on the same Tx beam. The signals in the at least one CSI-RS resource within NZP-CSI-RS-ResourceSet may be transmitted in different OFDM symbols.

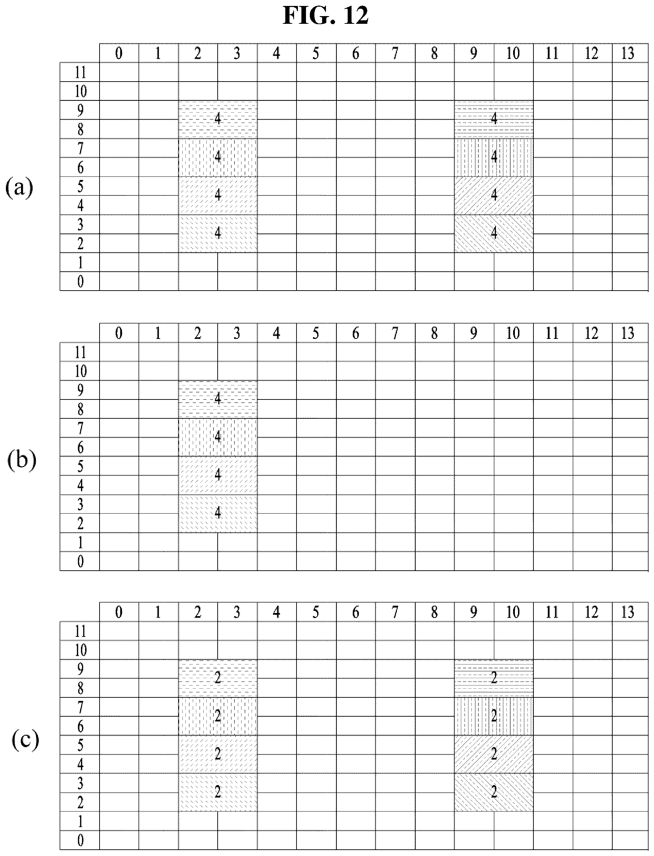

On the contrary, when Repetition is set to 'OFF', this is related to the Tx beam sweeping process of the BS. In the case where Repetition is set to 'OFF', the UE does not assume that signals in at least one CSI-RS resource within NZP-CSI-RS-ResourceSet are transmitted through the same DL spatial domain filter. That is, the signals in the at least one CSI-RS resource within NZP-CSI-RS-ResourceSet are transmitted on different Tx beams. FIG. 12 illustrates another exemplary DL BM procedure using a CSI-RS.

FIG. 6(a) illustrates an Rx beam refinement process of a UE, and FIG. 6(b) illustrates a Tx beam sweeping process of a BS. Further, FIG. 6(a) is for a case in which Repetition is set to 'ON', and FIG. 6(b) is for a case in which Repetition is set to 'OFF'.

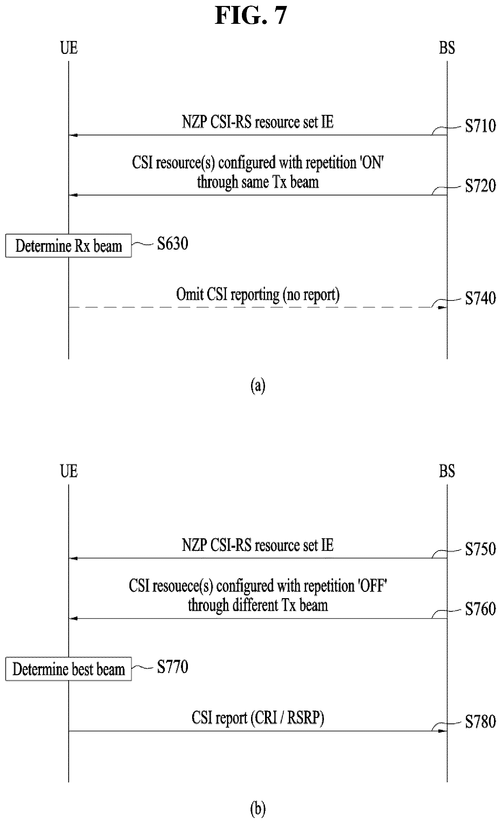

With reference to FIGS. 6(a) and 7(a), an Rx beam determination process of a UE will be described below.

FIG. 7(a) is a diagram illustrating a signal flow for an exemplary Rx beam determination process of a UE.

- The UE receives an NZP CSI-RS resource set IE including an RRC parameter 'Repetition' from a BS by RRC signaling (S710). The RRC parameter 'Repetition' is set to 'ON' herein.
- The UE repeatedly receives signals in resource(s) of a CSI-RS resource set for which the RRC parameter 'Repetition' is set to 'ON' on the same Tx beam (or DL spatial domain Tx filter) of the BS in different OFDM symbols (S720).
- The UE determines its Rx beam (S730).
- The UE skips CSI reporting (S740). That is, the UE may skip CSI reporting, when the RRC parameter 'Repetition' is set to 'ON'.

With reference to FIGS. 6(b) and 7(b), a Tx beam determination process of a BS will be described below.
FIG. 7(b) is a diagram illustrating an exemplary Tx beam determination process of a BS.

- A UE receives an NZP CSI-RS resource set IE including an RRC parameter 'Repetition' from the BS by RRC signaling (S750). When the RRC parameter 'Repetition' is set to 'OFF', this is related to a Tx beam sweeping process of the BS.
- The UE receives signals in resource(s) of a CSI-RS resource set for which the RRC parameter 'Repetition' is set to 'OFF' on different Tx beams (or DL spatial domain Tx filters) of the BS (S760).
- The UE selects (or determines) a best beam (S770).
- The UE reports the ID (e.g., CRI) of the selected beam and related quality information (e.g., an RSRP) to the BS (S780). That is, the UE reports a CRI and an RSRP corresponding to the CRI, when a CSI-RS is transmitted for BM.

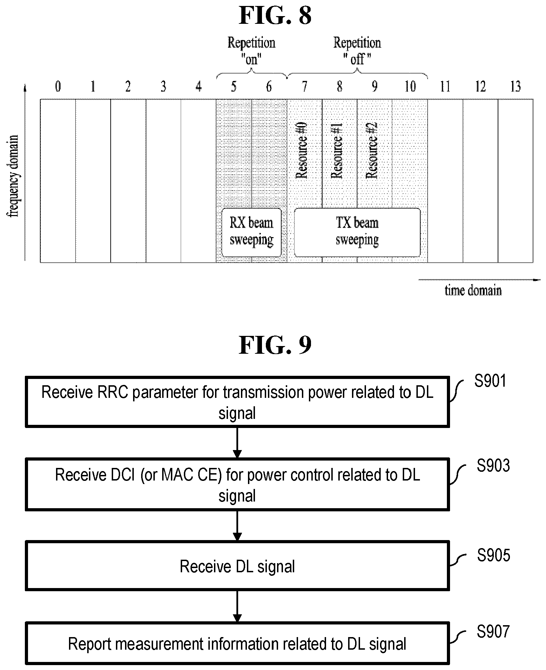

FIG. 8 is a diagram illustrating exemplary resource allocation in the time and frequency domains, which is related to the operation of FIG. 6.
When Repetition is set to 'ON' for a CSI-RS resource set, a plurality of CSI-RS resources may be repeatedly used on the same Tx beam, whereas when Repetition is set to 'OFF' for the CSI-RS resource set, different CSI-RS resources may be repeatedly transmitted on different Tx beams.

### 3. DL BM-Related Beam Indication

The UE may receive at least a list of up to M candidate transmission configuration indication (TCI) states for QCL indication by RRC signaling. M depends on a UE capability and may be 64.
Each TCI state may be configured with one RS set. Table 2 describes an example of a TCI-State IE. The TC-State IE is related to a QCL type corresponding to one or two DL RSs.

[Table 2]

```
            -- ASN1START
            -- TAG-TCI-STATE-START
            TCI-State ::= SEQUENCE {
            tci-StateId TCI-StateId,
            qcl-Type1 QCL-Info,
            qcl-Type2 QCL-Info OPTIONAL, -- Need R
             ...
             }
            QCL-Info ::= SEQUENCE {
            cell ServCellIndex OPTIONAL, -- Need R
            bwp-Id BWP-Id OPTIONAL, -- Cond CSI-RS-Indicated
            referenceSignal CHOICE {
            csi-rs NZP-CSI-RS-ResourceId,
            ssb SSB-Index
             },
            qcl-Type ENUMERATED {typeA, typeB, typeC, typeD},
             ...
             }
            -- TAG-TCI-STATE-STOP
            -- ASN1STOP
```

In Table 2, 'bwp-Id' identifies a DL BWP in which an RS is located, 'cell' indicates a carrier in which the RS is located, and 'referencesignal' indicates reference antenna port(s) serving as a QCL source for target antenna port(s) or an RS including the reference antenna port(s). The target antenna port(s) may be for a CSI-RS, PDCCH DMRS, or PDSCH DMRS.

4. Quasi-Co Location (QCL)

The UE may receive a list of up to M TCI-State configurations to decode a PDSCH according to a detected PDCCH carrying DCI intended for a given cell. M depends on a UE capability.

As described in Table 2, each TCI-State includes a parameter for establishing the QCL relationship between one or more DL RSs and a PDSCH DM-RS port. The QCL relationship is established with an RRC parameter qcl-Type1 for a first DL RS and an RRC parameter qcl-Type2 for a second DL RS (if configured).

The QCL type of each DL RS is given by a parameter 'qcl-Type' included in QCL-Info and may have one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is for a specific NZP CSI-RS, the NZP CSI-RS antenna port may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

Energy saving of a BS is considered important in wireless communication systems including 3GPP, because it may contribute to building eco-friendly networks by reducing carbon emissions and reducing the operational expenditure (OPEX) of communication industry players. In particular, as the introduction of 5G communication requires high transmission rates, BSs should be equipped with more antennas and provide services in wider bandwidths and frequency bands. As a result, the energy cost of a BS has reached 20% of the total OPEX according to a recent study. Due to this increased interest in BS energy saving, a new study item called "study on network energy savings" was approved in 3GPP NR release 18.

Specifically, the following enhancement techniques are under consideration in order to improve the energy saving capability of a BS from the perspective of transmission and reception.

- How to more efficiently apply one or more NES techniques in the time, frequency, spatial, and power domains based on UE assistance information and potential support/feedback from a UE, for a dynamic and/or semi-static operation and a finer granularity adaptation operation in transmission and reception -

For the purpose of NES, the BS may implement techniques such as controlling on/off for a predetermined duration on the time axis, controlling transmission/reception resources for a UE-common or UE-specific signal/channel, changing the amount of frequency resources, controlling transmission power, or turning antenna ports or TRPs on/off in the spatial domain. A state in which these techniques (defined as NES_techs, for convenience) are applied may be defined as an NES mode or an NES state.

The BS may indicate an applied NES_tech to the UE on an NES_tech basis or an NES_tech group basis (hereinafter, Approach 1), or preconfigure an NES_tech or NES_tech group corresponding to each code point of a specific indicator. The specific indicator may be indicated by DCI or a medium access control control element (MAC CE) or configured by higher layer signaling (hereinafter, Approach 2).

In Approach 1, when at least one NES_tech is applied, the UE may define a corresponding state as an NES mode or an NES state or define different NES modes or different NES states may be defined depending on which NES_techs are applied.

In Approach 2, for example, when there is a 1-bit indicator, '0' may indicate no corresponding NES_tech and '1' may be linked to one or more NES_techs. When '1' is indicated by the 1-bit indicator, the UE may define the corresponding state as an NES mode or an NES state.

In another example, when there is a 2-bit indicator, '00' may indicate no corresponding NES_tech, '01' may be lined to at least one NES_tech_A, '10' may be linked to at least one NES_tech_B, and '11' may be linked to at least one NES_tech_C. When a code point other than '00' is indicated by the 2-bit indicator, the UE may define the corresponding state as an NES mode or an NES state.

Further, when '01' is indicated by the 2-bit indicator, it may be defined as NES state #1, when '10' is indicated, it may be defined as NES state #2, and when '11' is indicated, it may be defined as NES state #3. In this manner, for each code point, it may be identified whether an NES state is indicated, or which NES state a current NES state is.

Particularly, the disclosure proposes a method of saving the energy of a BS by controlling the transmission power of the BS.

The disclosure mainly considers a scenario in which a BS obtains an NES gain by dynamically controlling the transmission power of a DL signal/channel. For example, in a situation in which the number of UEs associated with a specific BS is small or the number of UEs to be associated with the BS is expected to be small, the BS may reduce the transmission power of a DL signal/channel such as an SSB and/or a non-zero power (NZP) CSI-RS to reduce cell coverage and induce the UEs to communicate with a neighbor BS or a BS operating at a different frequency, thereby saving the energy of the BS.

For example, the BS may rapidly reduce or increase the transmission power of a DL signal/channel according to the amount of traffic by introducing signaling that dynamically changes a transmission power value of an SSB and/or NZP CSI-RS of the BS rather than a semi-static radio resource control (RRC) configuration, thereby reducing the power consumption of the BS.

Accordingly, the disclosure proposes signaling for adjusting the DL transmission power of a BS and an operation of a UE receiving it.

FIGS. 9 to 11 are diagrams illustrating an overall operation process of a UE and a BS according to the disclosure.

FIG. 9 is a diagram illustrating an overall operation process of a UE according to the disclosure.

Referring to FIG. 9, the UE may receive an RRC parameter for transmission power related to a DL signal (S901). For example, the RRC parameter may be a parameter related to the transmission power of an SSB and/or a parameter related to the transmission power of a CSI-RS.

The UE may receive downlink control information (DCI) or a medium access control control element (MAC CE) for power control related to the DL signal (S903). Further, the UE may receive the DL signal (S905). Further, the UE may report measurement information related to the DL signal (S907).

The DL signal may be an SSB and/or a CSI-RS and/or a PDSCH.

When the DL signal is an SSB and/or a CSI-RS, the above-described operation of the UE may be based on at least one of [Method #1] to [Method #5].

When the DL signal is a PDSCH, the above operation of the UE may be based on at least one of [Method #3] or [Method #4]. For example, S901 and S903 may be skipped in this case. Further, the measurement information in S907 may be a report related to the power of the PDSCH.

FIG. 10 is a diagram illustrating an overall operation process of a BS according to the disclosure.

Referring to FIG. 10, the BS may transmit an RRC parameter for transmission power related to a DL signal (S1001). For example, the RRC parameter may be a parameter related to the transmission power of an SSB and/or a parameter related to the transmission power of a CSI-RS.

The BS may transmit DCI or a MAC CE for power control related to the DL signal (S1003). Further, the BS may transmit the DL signal (S1005). Further, the BS may receive measurement information related to the DL signal (S1007).

The DL signal may be an SSB and/or a CSI-RS and/or a PDSCH.

When the DL signal is an SSB and/or a CSI-RS, the above-described operation of the BS may be based on at least one of [Method #1] to [Method #5].

When the DL signal is a PDSCH, the above-described operation of the BS may be based on at least one of [Method #3] or [Method #4]. For example, S1001 and S1003 may be skipped in this case. Further, the measurement information in S1007 may be a report related to the power of the PDSCH.

FIG. 11 is a diagram illustrating an overall operation process of a network according to the disclosure.

Referring to FIG. 11, a BS may transmit an RRC parameter for transmission power related to a DL signal to a UE (S1101). For example, the RRC parameter may be a parameter related to the transmission power of an SSB and/or a parameter related to the transmission power of a CSI-RS.

The BS may transmit DCI or a MAC CE for power control related to the DL signal to the UE (S1103). Further, the BS may transmit the DL signal to the UE (S1005). Further, the UE may report measurement information related to the DL signal to the BS (S1107).

The DL signal may be an SSB and/or a CSI-RS and/or a PDSCH.

When the DL signal is an SSB and/or a CSI-RS, the above-described operation of the network may be based on at least one of [Method #1] to [Method #5].

When the DL signal is a PDSCH, the above-described operation of the network may be based on at least one of [Method #3] or [Method #4]. For example, S1101 and S1103 may be skipped in this case. Further, the measurement information in S1107 may be a report related to the power of the PDSCH.

Meanwhile, in the methods described below, an SSB may be interpreted as an SS/PBCH block. That is, an SSB and an SS/PBCH block are used in the same meaning and may be interpreted as the same signal/channel.

## [Method #1] Method of controlling SSB transmission power

An existing UE may know SSB transmission power of a serving BS from a parameter *ss-PBCH-BlockPowerRRC.* Therefore, when the BS wants to modify the SSB transmission power, the RRC parameter needs to be reconfigured.

However, this process may involve a considerably large delay (e.g., tens of msec). To solve this problem, a method of more dynamically indicating an SSB transmission power value for the purpose of saving the energy of the BS may be considered.

In a method, information about an SSB transmission power value may be signaled by DCI or a MAC CE. Specifically, the absolute value of the SSB transmission power, such as in *ss-PBCH-BlockPower,* or an offset value (e.g., -3dB, 0dB, or +3dB) from a previous signaled *ss-PBCH-BlockPower* may be indicated by the DCI or MAC CE.

Alternatively, the information about the SSB transmission power may be indirectly provided by information such as antenna port or antenna element on/off, antenna port on/off, TRP on/off, or panel on/off of the BS by the DCI or MAC CE. For example, when it is indicated that the number of antenna ports or antenna elements is reduced by half, this may mean that the SSB power value is decreased by 3dB.

Considering a processing time of the DCI or MAC CE at the UE and/or a processing time for changing the power value at the BS, there may be an issue as to when to apply the signaled SSB power value. For this purpose, information about a time point when to apply the SSB power value may be directly indicated by the DCI and/or MAC CE, or preconfigured or predefined. For example, it may be predefined that the changed SSB power is applied k slots after a slot in which the DCI and/or MAC CE is received, and the value of k may be preset.

Alternatively, for example, it may be defined that the changed SSB power is applied at the first frame boundary after the reception time of the DCI and/or MAC CE, at the first SFN=0 after the reception time of the DCI and/or MAC CE, or at the start of the first system information (SI) modification period after the reception time of the DCI and/or MAC CE.

Considering a UE in an idle or inactive state, the information about the SSB transmission power value and/or the information about the time of applying the power value may be provided by broadcast data such as a PDCCH scheduling SI and/or a PDSCH carrying SI and/or a PDSCH including paging DCI and/or a paging message or by DCI scheduling the broadcast data.

In the above method, the DCI or MAC CE by which the information about the SSB transmission power value and/or the information about the time of applying the power value is provided may be transmitted UE-specifically, UE group-commonly, or cell-specifically. In the case of the DCI, it may be transmitted scrambled with a UE-specifically, UE group-commonly, or cell-specifically configured RNTI. In the case of the MAC CE, it may be transmitted through a PDSCH scheduled by DCI scrambled with the UE-specifically, UE group-commonly, or cell-specifically configured RNTI. In addition, the PDSCH may also be scrambled with the UE-specifically, UE group-commonly, or cell-specifically configured RNTI.

A carrier/serving cell carrying the DCI or MAC CE may be different from a carrier/serving cell to which the information about the SSB transmission power value is applied, and information about an SSB transmission power value for a plurality of carriers/serving cells may be provided by the DCI or MAC CE. For example, information about a common SSB transmission power value may be provided for a plurality of carriers/serving cells, or information about a different SSB transmission power value may be provided for each carrier/serving cell.

The above-described DCI may be DCI transmitted through a group common (GC) PDCCH.

[Table 3]

| |
|---|
| 7.1.1 UE behaviour |
| If a UE transmits a PUSCH on active UL BWP b of carrier *f* of serving cell c using parameter set configuration with index *j* and PUSCH power control adjustment state with index *l*, the UE determines the PUSCH transmission power $P_{\text{PUSCH},b,f,c}(i,j,q_d,l)$ in PUSCH transmission occasion i as $$P_{\text{PUSCH},b,f,c}(i,j,q_d,l) = \min\left\{ \begin{array}{l} P_{\text{CMAX},f,c}(i), \\ P_{\text{O\_PUSCH},b,f,c}(j)+10\log_{10}(2^{\mu}\cdot M_{\text{RB},b,f,c}^{\text{PUSCH}}(i))+\alpha_{b,f,c}(j)\cdot PL_{b,f,c}(q_d)+\Delta_{\text{TF},b,f,c}(i)+f_{b,f,c}(i,l) \end{array} \right\}$$ [dBm] where,     - $P_{\text{CMAX},f,c}(i)$ is the UE configured maximum output power defined in [8-1, TS 38.101-1], [8-2, TS38.101-2] and [8-3, TS38.101-3] for carrier *f* of serving cell c in PUSCH transmission occasion *i*.     - $P_{\text{O\_PUSCH},b,f,c}(j)$ is a parameter composed of the sum of a component $P_{\text{O\_NOMINAL,PUSCH},f,c}(j)$ and a component $P_{\text{O\_UE\_PUSCH},b,f,c}(j)$ where $j \in \{0,1, ... , J - 1\}$.         - If a UE established dedicated RRC connection using a Type-1 random access procedure, as described in clause 8, and is not provided *P0-PUSCH-AlphaSet* or for a PUSCH (re)transmission corresponding to a RAR UL grant as described in clause 8.3, $j = 0$, $P_{\text{O\_UE\_PUSCH},b,c}(0) = 0$, and $P_{\text{O\_NOMINAL,PUSCH},f,c}(0) = P_{\text{O\_PRE}} + \Delta_{\text{PREAMBLE,Msg3}},$ |

(continued)

where $P_{O\_PRE}$ is provided by *preambleReceivedTargetPower* [11, TS 38.321] and $\Delta_{PREAMBLE\_Msg3}$ is provided by *msg3-DeltaPreamble,* or $\Delta_{PREAMBLE,Msg3} = 0$ dB if *msg3-DeltaPreamble* is not provided, for carrier *f* of serving cell c

- If a UE established dedicated RRC connection using a Type-2 random access procedure, as described in clause 8, and is not provided *P0-PUSCH-AlphaSet,* or for a PUSCH transmission for Type-2 random access procedure as described in clause 8.1A,

$$j = 0, P_{O\_UE\_PUSCH,b,f,c}(0) = 0, \text{ and } P_{O\text{-NOMINAL\_PUSCH},f,c}(0) = P_{O\text{-PRE}} + \Delta_{MsgA\_PUSCH},$$

where $P_{O\_PRE}$ is provided by *msgA-preambleReceivedTargetPower,* or by *preambleReceivedTargetPower* if *msgA-preambleReceivedTargetPower* is not provided and $\Delta_{MsgA\_PUSCH}$ is provided by *msgA-DeltaPreamble,* or $\Delta_{MsgA\_PUSCH} = \Delta_{PREAMBLE\_Msg3}$ dB if *msgA-DeltaPreamble* is not provided, for carrier *f* of serving cell *c*

- For a PUSCH (re)transmission configured by *ConfiguredGrantConfig, j* = 1, $P_{O\_NOMINAL,PUSCH,f,c}(1)$ is provided by *p0-NominalWithoutGrant,* or $P_{O\_NOMINAL,PUSCH,f,c}(1) = P_{O\_NOMINAL,PUSCH,f,c}(0)$ if *p0-NominalWithoutGrant* is not provided.

    - If the UE is provided two SRS resource sets in *srs-ResourceSetToAddModList* or *srs-ResourceSetToAddModListDCI-0-2* with *usage* set to 'codebook' or 'nonCodebook', and is provided *p0-PUSCH-Alpha2,* for a retransmission of a configured grant Type 1 PUSCH, or for activation or retransmission of a configured grant Type 2 PUSCH, scheduled by a DCI format that includes a SRS resource set indicator field, and for active UL BWP *b* of carrier *f* of serving cell

        - If the SRS resource set indicator value is 00, first $P_{O\text{-UE PUSCH},b,f,c}(1)$ value is provided by the value of *p0-PUSCH-Alpha* in *ConfiguredGrantConfig.*

        - If the SRS resource set indicator value is 01, second $P_{O\_UE\_PUSCH,b,f,c}(1)$ value is provided by the value of *p0-PUSCH-Alpha2* in *ConfiguredGrantConfig.*

        - If the SRS resource set indicator value is 10 or 11, first and second $P_{O\_UE\_PUSCH,b,f,c}(1)$ values are respectively provided by the values of *p0-PUSCH-Alpha* and by *p0-PUSCH-Alpha2* in *ConfiguredGrantConfig.*

    - else, $P_{O\_NOMINAL,PUSCH,f,c}(1)$ is provided by *p0* obtained from *p0-PUSCH-Alpha* in *ConfiguredGrantConfig* that provides an index *P0-PUSCH-AlphaSetId* to a set of *P0-PUSCH-AlphaSet,* or by *p0-PUSCH* for a PUSCH (re)transmission as described in clause 19.1, for active UL BWP *b* of carrier *f* of serving cell *c*

- *For j* $\in$ {2, ... ,*J* - 1} = $S_J$, a $P_{O\_NOMINAL,PUSCH,f,c}(j)$ value, applicable for all *j* $\in$ $S_J$, is provided by *p0-NominalWithGrant,* or $P_{O\_NOMINAL,PUSCH,f,c}(j) = P_{O\_NOMINAL,PUSCH,f,c}(0)$ if *p0-NominalWithGrant* is not provided, for each carrier *f* of serving cell c and a set of $P_{O\_UE\_PUSCH,b,f,c}(j)$ values are provided by a set of *p0* in *P0-PUSCH-AlphaSet* indicated by a respective set of *p0-PUSCH-AlphaSetId* for active UL BWP *b* of carrier *f* of serving cell *c*

    - If the UE is provided by *SRI-PUSCH-PowerControl* more than one values of *p0-PUSCH-AlphaSetId* and if a DCI format scheduling the PUSCH transmission includes an SRI field, the UE obtains a mapping from *sri-PUSCH-PowerControlId* in *SRI-PUSCH-PowerControl* between a set of values for the SRI field in the DCI format [5, TS 38.212] and a set of indexes provided by *p0-PUSCH-AlphaSetId* that map to a set of *P0-PUSCH-AlphaSet* values and determines the value of $P_{O\_UE\_PUSCH,b,f,c}(j)$ from the *p0-PUSCH-AlphaSetId* value that is mapped to the SRI field value. If the UE is provided by *SRI-PUSCH-PowerControl* more than one values of *p0-PUSCH-AlphaSetId*

        - if the DCI format scheduling the PUSCH transmission includes two SRI fields and the UE is provided two SRS resource sets in *srs-ResourceSetToAddModList* or *srs-ResourceSetToAddModListDCI-0-2* with *usage* set to 'codebook' and if, the UE obtains a mapping from *sri-PUSCH-PowerControlId* in *SRI-PUSCH-PowerControl* between a set of values for the two SRI fields and a set of indexes provided by *p0-PUSCH-AlphaSetId* that map to a set of *P0-PUSCH-AlphaSet* values, and determines first and second values of $P_{O\text{-UE-PUSCH},b,f,c}(j)$ from the *p0-PUSCH-AlphaSetId* values that are mapped to the values of the first and second SRI fields, respectively.

- if the DCI format scheduling the PUSCH transmission includes two SRI fields and the UE is provided two SRS resource sets in *srs-ResourceSetToAddModList* or *srs-ResourceSetToAddModListDCI-0-2* with *usage* set to 'nonCodebook', the UE obtains a mapping from *sri-PUSCH-PowerControlId* in *SRI-PUSCH-PowerControl* between

- a set of values for the first SRI field value and a set of indexes provided by *p0-PUSCH-AlphaSetId* that map to a set of *P0-PUSCH-AlphaSet* values, and determines the first value of $P_{O-UE\_PUSCH,b,f,c}(j)$ from the *p0-PUSCH-AlphaSetId* value that is mapped to the first SRI field value, and

- a set of values associated with the second SRI field value for a same number of layers as indicated by the first SRI field [5, TS 38.212], and a set of indexes provided by *p0-PUSCH-AlphaSetId* that map to a set of *P0-PUSCH-AlphaSet* values, and determines the second value of $P_{O\_UE\_PUSCH,b,f,c}(j)$ from the *p0-PUSCH-AlphaSetId* value that is mapped to the second SRI field value corresponding to Tables 7.3.1.1.2-28/29/30/31 of [5, TS 38.212].

- If the DCI format also includes an open-loop power control parameter set indication field and a value of the open-loop power control parameter set indication field is '1' and if the DCI format scheduling the PUSCH transmission includes an SRI field, the UE determines a value of $P_{O\_UE\_PUSCH,b,f,c}(j)$ from a first value in *P0-PUSCH-Set* with a *p0-PUSCH-SetId* value mapped to the SRI field value.

- If the UE is provided by *SRI-PUSCH-PowerControl* more than one values of *p0-PUSCH-AlphaSetId*

- if a DCI format scheduling the PUSCH transmission includes two SRI fields and an open-loop power control parameter set indication field and the UE is provided two SRS resource sets in *srs-ResourceSetToAddModList* or *srs-ResourceSetToAddModListDCI-0-2* with *usage* set to 'codebook'

- if a value of the open-loop power control parameter set indication field is '0', the UE determines two values of $P_{O\_UE\_PUSCH,b,f,c}(j)$ from the *p0-PUSCH-AlphaSetId* values in *SRI-PUSCH-PowerControl* that are mapped to the two SRI values corresponding to each SRS resource set with *usage* set to 'codebook'.

- if a value of the open-loop power control parameter set indication field is '1', the UE determines two values of $P_{O\_UE-PUSCH,b,f,c}(j)$ from first values in *P0-PUSCH-Set* in *P0-PUSCH-SetList* and *P0-PUSCH-Set* in *P0-PUSCH-SetList2* with *p0-PUSCH-SetId* values mapped to the two SRI values corresponding to each SRS resource set with *usage* set to 'codebook', respectively.

- if a DCI format scheduling the PUSCH transmission includes two SRI fields and an open-loop power control parameter set indication field and the UE is provided two SRS resource sets in *srs-ResourceSetToAddModList* or *srs-ResourceSetToAddModListDCI-0-2* with *usage* set to 'nonCodebook',

- if a value of the open-loop power control parameter set indication field is '0', the UE determines two values of $P_{O\_UE\_PUSCH,b,f,c}(j)$ from the *p0-PUSCH-AlphaSetId* values in *SRI-PUSCH-PowerControl* that are mapped to the first SRI field value corresponding to the first SRS resource set with *usage* set to 'nonCodebook' and to a second value, that is associated with the second SRI field value corresponding to Tables 7.3.1.1.2-28/29/30/31 of [5, TS 38.212] for a same number of layers as indicated by the first SRI field value, corresponding to the second SRS resource set with *usage* set to 'nonCodebook'.

- if a value of the open-loop power control parameter set indication field is '1', the UE determines two values of $P_{O\_UE\_PUSCH,b,f,c}(j)$ from first values in *P0-PUSCH-Set* in *P0-PUSCH-SetList* and *P0-PUSCH-Set* in *P0-PUSCH-Set-List2* with *p0-PUSCH-SetId* values mapped to the first SRI field value corresponding to the first SRS resource set with *usage* set to 'nonCodebook, and a second value, that is associated with the second SRS field value corresponding to Tables 7.3.1.1.2-28/29/30/31 of [5, TS 38.212] for a same number of layers as indicated by the first SRI field value, corresponding to the second SRS resource set with *usage* set to 'nonCodebook', respectively.

- If the UE is not provided two SRS resource sets in *srs-ResourceSetToAddModList* or *srs-ResourceSetToAddModListDCI-0-2* with *usage* set to 'codebook' or 'nonCodebook' and if the PUSCH transmission, except for the PUSCH retransmission corresponding to a RAR UL grant, is scheduled by a DCI format that does not include an SRI field, or if *SRI-PUSCH-PowerControl* is not provided to the UE, *j* = 2,

    - If *P0-PUSCH-Set* is provided to the UE and the DCI format includes an open-loop power control parameter set indication field, the UE determines a value of $P_{O\_UE\_PUSCH,b,f,c}(j)$ from

        - a first *P0-PUSCH-AlphaSet* in *p0-AlphaSets* if a value of the open-loop power control parameter set indication field is '0' or '00'

        - a first value in *P0-PUSCH-Set* with the lowest *p0-PUSCH-SetID* value if a value of the open-loop power control parameter set indication field is '1' or '01'

        - a second value in *P0-PUSCH-Set* with the lowest *p0-PUSCH-SetID* value if a value of the open-loop power control parameter set indication field is '10'

- else, the UE determines $P_{O\_UE\_PUSCH,b,f,c}(j)$ from the value of the first *P0-PUSCH-AlphaSet* in *p0-AlphaSets*

- If the UE is provided two SRS resource sets in *srs-ResourceSetToAddModList* or *srs-ResourceSetToAddModListDCI-0-2* with *usage* set to 'codebook' or 'nonCodebook' and the PUSCH transmission is scheduled by a DCI format that does not include an SRI field and includes an SRS resource set indicator field with value 10 or 11

    - If *P0-PUSCH-Set* is provided to the UE and the DCI format includes an open-loop power control parameter set indication field, the UE determines first and second values of $P_{O\_UE-PUSCH,b,f,c}(j)$ as

        - first and second *P0-PUSCH-AlphaSet* in *p0-AlphaSets* if the open-loop power control parameter set indication value is '0' or '00'

        - first value in *P0-PUSCH-Set* with the lowest *p0-PUSCH-SetID* value in *p0-PUSCH-SetList* and first value in *P0-PUSCH-Set* with the lowest *p0-PUSCH-SetID* value in *p0-PUSCH-SetList2,* respectively, if the open-loop power control parameter set indication value is '1' or '01'

        - second value in *P0-PUSCH-Set* with the lowest *p0-PUSCH-SetID* value in *p0-PUSCH-SetList* and second value in *P0-PUSCH-Set* with the lowest *p0-PUSCH-SetID* in *p0-PUSCH-SetList2,* respectively, if the open-loop power control parameter set indication value is '10' or '11'

    - else, the UE determines first and second values $P_{O\_UE\_PUSCH,b,f,c}(j)$ from the value of the first and second *P0-PUSCH-AlphaSet* in *p0-AlphaSets,* respectively

- For $\alpha_{b,f,c}(j)$

    - For *j* = 0,

        - if $P_{O\_NOMINAL\_PUSCH,f,c}(0) - P_{O\_PRE} + \Delta_{MsgA\_PUSCH}$ and *msgA-Alpha* is provided, $\alpha_{b,f,c}(0)$ is the value of *msgA-Alpha*

        - elseif $P_{O\_NOMINAL\_PUSCH,f,c}(0) = P_{O\_PRE} + \Delta_{PREAMBLE\_Msg3}$ or *msgA-Alpha* is not provided, and *msg3-Alpha* is provided, $\alpha_{b,f,c}(0)$ is the value of *msg3-Alpha*

        - else, $\alpha_{b,f,c}(0)$ = 1

    - For *j* = 1,

(continued)

- If the UE is provided two SRS resource sets in *srs-ResourceSetToAddModList* or *srs-Resource-SetToAddModListDCI-0-2* with *usage* set to 'codebook' or 'nonCodebook', and is provided *p0-PUSCH-Alpha2,* for a retransmission of a configured grant Type 1 PUSCH, or for activation or retransmission of a configured grant Type 2 PUSCH, scheduled by a DCI format that includes an SRS resource set indicator field, and for active UL BWP b of carrier f of serving cell

    - If the SRS resource set indicator value is 00, first $\alpha_{b,f,c}(1)$ value is provided by *p0-PUSCH-Alpha* in *ConfiguredGrantConfig.*

    - If the SRS resource set indicator value is 01, first $\alpha_{b,f,c}(1)$ value is provided by *p0-PUSCH-Alpha2* in *ConfiguredGrantConfig.*

    - If the SRS resource set indicator value is 10 or 11, first and second $\alpha_{b,f,c}(1)$ values are respectively provided by *p0-PUSCH-Alpha* and *p0-PUSCH-Alpha2* in *ConfiguredGrant-Config.*

- else $\alpha_{b,f,c}(1)$ is provided by *alpha* obtained from *p0-PUSCH-Alpha* in *ConfiguredGrantConfig* providing an index *P0-PUSCH-AlphaSetId* to a set of *P0-PUSCH-AlphaSet*, or by *alpha* for a PUSCH (re)transmission as described in clause 19.1, for active UL BWP b of carrier f of serving cell c

- For $j \in S_J$, a set of $\alpha_{b,f,c}(j)$ values are provided by a set of *alpha* in *P0-PUSCH-AlphaSet* indicated by a respective set of *p0-PUSCH-AlphaSetId* for active UL BWP b of carrier f of serving cell c

- If the UE is provided *SRI-PUSCH-PowerControl* and more than one values of *p0-PUSCH-Alpha-SetId* in *p0-AlphaSets,*

    - if a DCI format scheduling the PUSCH transmission includes two SRI fields and the UE is provided two SRS resource sets in *srs-ResourceSetToAddModList* or *srs-Resource-SetToAddModListDCI-0-2* with *usage* set to 'codebook', the UE obtains a mapping from *sri-PUSCH-PowerControlId* in *SRI-PUSCH-PowerControl* between a set of values for

        - the two SRI fields and a set of indexes provided by *P0-PUSCH-AlphaSetId* that map to *P0-PUSCH-AlphaSet* values, and determines first and second values of $\alpha_{b,f,c}(j)$ from the *P0-PUSCH-AlphaSetID* values that are mapped to the values of the first and second SRI field values, respectively.

    - if a DCI format scheduling the PUSCH transmission includes two SRI fields and the UE is provided two SRS resource sets in *srs-ResourceSetToAddModList* or *srs-Resource-SetToAddModListDCI-0-2* with *usage* set to 'nonCodebook', the UE obtains a mapping from *sri-PUSCH-PowerControlId* in *SRI-PUSCH-PowerControl* between a set of values for

        - the first SRI field and a set of indexes provided by *P0-PUSCH-AlphaSetId* that map to *P0-PUSCH-AlphaSet* values, and determines first value of $\alpha_{b,f,c}(j)$ from the *P0-PUSCH-AlphaSetID* value that is mapped to the first SRI field value, and

        - the second value, associated with the second SRI field value corresponding to Tables 7.3.1.1.2-28/29/30/31 of [5, TS 38.212] for a same number of layers as indicated by the first SRI field value, and a set of indexes provided by *p0-PUSCH-AlphaSetId* that map to a set of *P0-PUSCH-AlphaSet* values, and determines the second value of $\alpha_{b,f,c}(j)$ from the *p0-PUSCH-AlphaSetId* value that is mapped to the second SRI field value

    - if a DCI format scheduling the PUSCH transmission includes one SRI field, the UE obtains a mapping from *sri-PUSCH-PowerControlId* in *SRI-PUSCH-PowerControl* between a set of values for the SRI field in the DCI format [5, TS 38.212] and a set of indexes provided by *p0-PUSCH-AlphaSetId* that map to a set of *P0-PUSCH-AlphaSet* values and determines the values of $a_{b,f,c}(j)$ from the *p0-PUSCH-AlphaSetId* value that is mapped to the SRI field value

- If the UE is not provided two SRS resource sets in *srs-ResourceSetToAddModList* or *srs-ResourceSetToAddModListDCI-0-2* with *usage* set to 'codebook' or 'nonCodebook' and if the PUSCH transmission except for the PUSCH retransmission corresponding to a RAR UL grant is scheduled by a DCI format that does not include an SRI field, or if *SRI-PUSCH-PowerControl* is not provided to the UE, *j* = 2, and the UE determines $\alpha_{b,f,c}(j)$ from the value of the first *P0-PUSCH-AlphaSet* in *p0-AlphaSets*

(continued)

- If the UE is provided two SRS resource sets in *srs-ResourceSetToAddModList* or *srs-ResourceSetToAddModListDCI-0-2* with *usage* set to 'codebook' or 'nonCodebook' and the PUSCH transmission is scheduled by a DCI format that does not include an SRI field and includes an SRS resource set indicator field with value 10 or 11, the UE determines $a_{b,f,c}(j)$ from first and second *P0-PUSCH-AlphaSet* in *p0-AlphaSets*

- $M_{\mathrm{RB},b,f,c}^{\mathrm{PUSCH}}(i)$ is the bandwidth of the PUSCH resource assignment expressed in number of resource blocks for PUSCH transmission occasion i on active UL BWP b of carrier *f* of serving cell *c* and $\mu$ is a SCS configuration defined in [4, TS 38.211]

- $PL_{b,f,c}(q_d)$ is a downlink pathloss estimate in dB calculated by the UE using reference signal (RS) index $q_d$ for the active DL BWP, as described in clause 12, of carrier *f* of serving cell *c*

- If the UE is not provided *PUSCH-PathlossReferenceRS* and *enableDefaultBeamPL-ForSRS,* or before the UE is provided dedicated higher layer parameters, the UE calculates $PL_{b,f,c}(q_d)$ using a RS resource from an SS/PBCH block with same SS/PBCH block index as the one the UE uses to obtain *MIB*

- If the UE is configured with a number of RS resource indexes, up to the value of *maxNrofPUSCH-PathlossReferenceRSs,* and a respective set of RS configurations for the number of RS resource indexes by *PUSCH-PathlossReferenceRS,* the set of RS resource indexes can include one or both of a set of SS/PBCH block indexes, each provided by *ssb-Index* when a value of a corresponding *pusch-PathlossReferenceRS-Id* maps to a SS/PBCH block index, and a set of CSI-RS resource indexes, each provided by *csi-RS-Index* when a value of a corresponding *pusch-PathlossReferenceRS-Id* maps to a CSI-RS resource index. The UE identifies a RS resource index $q_d$ in the set of RS resource indexes to correspond either to a SS/PBCH block index or to a CSI-RS resource index as provided by *pusch-PathlossReferenceRS-Id* in *PUSCH-PathlossReferenceRS*

- If the PUSCH transmission is scheduled by a RAR UL grant as described in clause 8.3, or for a PUSCH transmission for Type-2 random access procedure as described in clause 8.1A, the UE uses the same RS resource index $q_d$ as for a corresponding PRACH transmission

- If the UE is provided *SRI-PUSCH-PowerControl* and more than one values of *PUSCH-PathlossReferenceRS-Id,* the UE obtains a mapping from *sri-PUSCH-PowerControlId* in *SRI-PUSCH-PowerControl* between a set of values for the SRI field, or for first and second SRI fields if the UE is provided two SRS resource sets in *srs-ResourceSetToAddModList* or *srs-ResourceSetToAddModListDCI-0-2* with *usage* set to 'codebook', or values for a first SRI field and values associated with a second SRI field value corresponding to Tables 7.3.1.1.2-28/29/30/31 of [5, TS 38.212] for a same number of layers as indicated by the first SRI field value if the UE is provided two SRS resource sets in *srs-ResourceSetToAddModList* or *srs-ResourceSetToAddModListDCI-0-2* with *usage* set to 'nonCodebook', in a DCI format scheduling the PUSCH transmission and a set of *PUSCH-PathlossReferenceRS-Id* values and determines the RS resource index $q_d$, or respective first and second RS resource indexes $q_d$, from the value of *PUSCH-PathlossReferenceRS-Id* that is mapped to the SRI field value, or from the values of *PUSCH-PathlossReferenceRS-Id* that are mapped to respective first and second SRI field values if the UE is provided two SRS resource sets in *srs-ResourceSetToAddModList* or *srs-ResourceSetToAddModListDCI-0-2* with *usage* set to 'codebook', or from the values of *PUSCH-PathlossReferenceRS-Id* that are mapped to respective first SRI field value and a value associated with the second SRI field value corresponding to Tables 7.3.1.1.2-28/29/30/31 of [5, TS 38.212] for a same number of layers as indicated by the first SRI field value if the UE is provided two SRS resource sets in *srs-ResourceSetToAddModList* or *srs-ResourceSetToAddModListDCI-0-2* with *usage* set to 'nonCodebook',

where the RS resource is either on serving cell *c* or, if provided, on a serving cell indicated by a value of *pathlossReferenceLinking*

- If the PUSCH transmission is scheduled by DCI format 0_0, and

(continued)

- if two spatial settings from *PUCCH-SpatialRelationInfo* are activated for a PUCCH resource with a lowest index, the UE uses the same RS resource index $q_d$ as for a PUCCH transmission with a spatial setting from the two spatial settings with lowest index in the PUCCH resource with the lowest index

- else, if the UE is provided a spatial setting by *PUCCH-SpatialRelationInfo* for a PUCCH resource with a lowest index for active UL BWP b of each carrier *f* and serving cell *c*, as described in clause 9.2.2, the UE uses the same RS resource index $q_d$ as for a PUCCH transmission in the PUCCH resource with the lowest index

- If the PUSCH transmission is not scheduled by DCI format 0_0, and if the UE is provided *enableDefaultBeamPL-ForSRS* and is not provided *PUSCH-PathlossReferenceRS* and *PUSCH-PathlossReferenceRS-r16,* the UE uses the same RS resource index $q_d$ as for an SRS resource set with an SRS resource associated with the PUSCH transmission

- If

- the PUSCH transmission is scheduled by DCI format 0_0 and the UE is not provided a spatial setting for a PUCCH transmission, or
- the PUSCH transmission is scheduled by DCI format 0_1 or DCI format 0_2 that does not include an SRI field, or
- *SRI-PUSCH-PowerControl* is not provided to the UE, the UE determines a RS resource index $q_d$ with a respective *PUSCH-PathlossReferenceRS-Id* value being equal to zero where the RS resource is either on serving cell *c* or, if provided, on a serving cell indicated by a value of *pathlossReference-Linking*

- If

- the PUSCH transmission is scheduled by DCI format 0_0 on serving cell *c*,
- the UE is not provided PUCCH resources for the active UL BWP of serving cell *c*, and
- the UE is provided *enableDefaultBeamPL-ForPUSCH0-0* the UE determines a RS resource index $q_d$ providing a periodic RS resource configured with *qcl-Type* set to 'typeD' in the TCI state or the QCL assumption of a CORESET with the lowest index in the active DL BWP of the serving cell *c*. If the CORESET has two activated TCI states, as described in clause 10.1, the UE determines the RS resource index $q_d$ based on the first TCI state.

- If

- the PUSCH transmission is scheduled by DCI format 0_0 on serving cell c,
- the UE is not provided a spatial setting for PUCCH resources on the active UL BWP of the primary cell [11, TS 38.321], and
- the UE is provided *enableDefaultBeamPL-ForPUSCH0-0* the UE determines a RS resource index $q_d$ providing a periodic RS resource configured with *qcl-Type* set to 'typeD' in the TCI state or the QCL assumption of a CORESET with the lowest index in the active DL BWP of the serving cell c. If the CORESET has two activated TCI states, as described in clause 10.1, the UE determines the RS resource index $q_d$ based on the first TCI state.

- For a PUSCH transmission configured by *ConfiguredGrantConfig,* if *rrc-ConfiguredUplinkGrant* is included in *ConfiguredGrantConfig,* a RS resource index $q_d$ is provided by a value of *pathlossReferenceIndex* included in *rrc-ConfiguredUplinkGrant* where the RS resource is either on serving cell *c* or, if provided, on a serving cell indicated by a value of *pathlossReferenceLinking*. If the UE is provided two SRS resource sets in *srs-ResourceSetToAddModList* or *srs-ResourceSetToAddModListDCI-0-2* with *usage* set to 'codebook' or 'nonCodebook' and for configured grant Type 1 PUSCH, first and second RS resource indexes $q_d$ are provided by respective values of *pathlossReferenceIndex* and *pathlossReferenceIndex2* in *rrc-ConfiguredUplinkGrant.*

(continued)

- For a PUSCH transmission configured by *ConfiguredGrantConfig* that does not include *rrc-ConfiguredUplinkGrant,* the UE determines a RS resource index $q_d$ from a value of *PUSCH-PathlossReferenceRS-Id* that is mapped to a SRI field value in a DCI format activating the PUSCH transmission.

    - If the UE is provided two SRS resource sets in *srs-ResourceSetToAdd-ModList* or *srs-ResourceSetToAddModListDCI-0-2* with *usage* set to 'codebook' and the DCI format activating the PUSCH transmission includes two SRI fields, the UE determines first and second RS resource indexes $q_d$ from respective first and second values of *PUSCH-PathlossReferenceRS-Id* that are mapped to the first and second SRI values corresponding to each SRS resource set with *usage* set to 'codebook', respectively.

    - If the UE is provided two SRS resource sets in *srs-ResourceSetToAdd-ModList* or *srs-ResourceSetToAddModListDCI-0-2* with *usage* set to 'non-Codebook' and the DCI format activating the PUSCH transmission includes two SRI fields, the UE determines first and second RS resource indexes $q_d$ from respective first and second values of *PUSCH-PathlossReferenceRS-Id* that are mapped to the first SRI value corresponding to the first SRS resource set with *usage* set to 'nonCodebook', and the value, associated with the second SRI field value corresponding to Tables 7.3.1.1.2-28/29/30/31 of [5, TS 38.212] for a same number of layers as indicated by the first SRI field value, corresponding to the second SRS resource set with *usage* set to 'nonCodebook'.

    - If the UE is provided two SRS resource sets in *srs-ResourceSetToAdd-ModList* or *srs-ResourceSetToAddModListDCI-0-2* with *usage* set to 'codebook' or 'nonCodebook' and the DCI format activating the PUSCH transmission does not include an SRI field, the UE determines first and second RS resource indexes $q_d$ with respective first and second *PUSCH-Pathloss-ReferenceRS-Id* value being equal to zero and one.

    - If the DCI format activating the PUSCH transmission does not include an SRI field, the UE determines a RS resource index $q_d$ with a respective *PUSCH-PathlossReferenceRS-Id* value being equal to zero where the RS resource is either on serving cell *c* or, if provided, on a serving cell indicated by a value of *pathlossReferenceLinking*

- If the UE is provided *enablePL-RS-UpdateForPUSCH-SRS,* a mapping between *sri-PUSCH-PowerControlId* and *PUSCH-PathlossReferenceRS-Id* values can be updated by a MAC CE as described in [11, TS 38.321]

    - For a PUSCH transmission scheduled by a DCI format that does not include an SRI field, or for a PUSCH transmission configured by *Configured-GrantConfig* and activated, as described in clause 10.2, by a DCI format that does not include an SRI field, the UE determines a RS resource index $q_d$ from the *PUSCH-PathlossReferenceRS-Id* mapped to *sri-PUSCH-Power-ControlId* = 0. If the UE is provided two SRS resource sets in *srs-Resource-SetToAddModList* or *srs-ResourceSetToAddModListDCI-0-2* with *usage* set to 'codebook' or 'nonCodebook', the UE determines first and second RS resource indexes $q_d$ from respective *PUSCH-PathlossReferenceRS-Id* mapped to *sri-PUSCH-PowerControlId* = 0 of *sri-PUSCH-MappingToAdd-ModList* and *sri-PUSCH-PowerControlId* = 0 of *sri-PUSCH-MappingToAdd-ModList2,* respectively.

- If the UE is not provided *enablePL-RS-UpdateForPUSCH-SRS*

    - For a PUSCH transmission scheduled by a DCI format that does not include an SRI field, if the UE is provided two SRS resources in *srs-ResourceSetToAddModList* or *srs-ResourceSetToAddModListDCI-0-2* with *usage* set to 'codebook' or 'nonCodebook', the UE determines first and second RS resource indexes $q_d$ with respective first and second *PUSCH-PathlossReferenceRS-Id* values being equal to 0 and 1.

(continued)

| |
|---|
| $PL_{b,f,c}(q_d)$ = *referenceSignalPower* - higher layer filtered RSRP, where *referenceSignalPower* is provided by higher layers and RSRP is defined in [7, TS 38.215] for the reference serving cell and the higher layer filter configuration provided by *QuantityConfig* is defined in [12, TS 38.331] for the reference serving cell If the UE is not configured periodic CSI-RS reception, *referenceSignalPower* is provided by *ss-PBCH-BlockPower*. If the UE is configured periodic CSI-RS reception, *referenceSignalPower* is provided either by *ss-PBCH-BlockPower* or by *powerControlOffsetSS* providing an offset of the CSI-RS transmission power relative to the SS/PBCH block transmission power [6, TS 38.214]. If *powerControlOffsetSS* is not provided to the UE, the UE assumes an offset of 0 dB. |

Table 3 is an excerpt from 3GPP TS 38.213 v17.1.0. As illustrated in Table 3, in order to measure a DL path-loss value, the UE may need an SSB transmission power value and an RSRP (particularly, SS-RSRP) value that has passed layer 3 (L3) filtering. For example, when a *referenceSignalPower* value may be determined based on an *ss-PBCH-BlockPower* value, if the absolute value of SSB transmission power, an offset value from a previous signaled *ss-PBCH-BlockPower,* or information about an SSB transmission power value may be provided by signaling such as (group common) DCI or a MAC CE as in the proposed method, the UE may update the new *ss-PBCH-BlockPower* value based on the power value or offset value, and also update the *referenceSignalPower* value and the DL path-loss value based on the updated value. The above-described DCI may be DCI transmitted through a GC PDCCH.

The UE may perform a synchronization signal (SS)-RSRP and/or SS-reference signal received quality (RSRQ) and/or SS- signal to interference plus noise ratio (SINR) measurement to calculate the DL path-loss value. The measurement may correspond to an L3 measurement and/or L1 measurement.

In this case, values measured before the *ss-PBCH-BlockPower* is changed may not be used, and the measurement may be restarted or an L3 filter coefficient may be adjusted from a time when the *ss-PBCH-BlockPower* is changed, or a filter coefficient for a time point before/after the time when *ss-PBCH-BlockPower* is changed may be set and a corresponding RRM may be performed.

Alternatively, information related to a time stamp for the time when the UE performs the measurement or starts filtering for the measurement may be included in a measurement report. The procedure may be equally extended to RRM for one or more neighbor cells as well as RRM for a serving cell.

For one or more neighbor cells, information about the absolute value of SSB transmission power, an offset value from a previous signaled *ss-PBCH-BlockPower,* or information about an SSB transmission power value may be provided by signaling such as (group common) DCI or MAC CE as in the proposed method. For example, when the information about the power value or offset value is indicated by SI, an SI change may be notified by an SI modification message of paging.

According to the 3GPP TS 38.213 specification, when performing an RLM and/or link recovery procedure or beam failure detection (BFD), the UE may determine whether a link quality is higher than or lower than a specific threshold based on a configured/defined DL signal. For example, in the case of the RLM, the UE may determine whether the link quality is higher than Q_in or lower than Q_out. Or in the case of the BFD, the UE may determine whether the link quality is higher than Q_in,LR or lower than Q_out,LR.

The UE may finally declare radio link failure or beam failure based on how many times the event has occurred (i.e., a counter value for the event) during a given time period (i.e., a timer period).

When an absolute value of SSB transmission power or an offset value from a previous signaled *ss-PBCH-BlockPower* or information about an SSB transmission power value is provided by signaling such as (group-common) DCI or a MAC CE as in the proposed method to dynamically change an *ss-PBCH-BlockPower* value, a threshold and/or a timer value and/or a counter value in the RLM/BFD procedure may also be adjusted (by a pre-agreement) based on a variation of the *ss-PBCH-BlockPower* value. For example, when the offset from the *ss-PBCH-BlockPower* value is signaled as 3dB to the UE, the UE may increase the threshold such as Q_in or Q_out or Q_in,LR or Q_out,LR by 3dB in performing SSB-based RLM or BFD.

For handover of a connected UE, a method may be considered in which a handover threshold or an offset value for a handover offset for a specific cell with changed SSB power is transmitted to the UE to appropriately trigger an event such as A1, A2, or A3 (i.e., events A1/A2/A3 defined in section 5.5.4 of 3GPP TS 38.331).

When SSB power is changed in the above method, Alt 1) CSI-RS transmission power may also be changed by as much as a variation of the SSB power, or Alt 2) CSI-RS transmission power may be changed only based on an RRC parameter.

For example, when 20dB is configured as an *ss-PBCH-BlockPower* value and 3dB is configured as a *powerControlOffsetSS* value, the UE may recognize a CSI-RS transmission power value of the BS as 23dBm. In an example of applying the above method, when +1dB is signaled as an offset from the *ss-PBCH-BlockPower* value through group-common DCI, the UE receiving the indication may recognize the SSB transmission power value of the BS as 21dBm, and the CSI-RS transmission power value of the BS as 24dBm in Alt 1 and as 23dBm in Alt 2.

**[Method #1-1] Method of controlling transmission power on a per-SSB index or per-SSB group index basis**

A method may be considered in which the transmission power of a BS is saved by maintaining the transmission power of a specific SSB index and controlling only the transmission power of other SSB indexes in consideration of coexistence with existing NR UEs. To support this, a method of controlling transmission power on a per-SSB index or per-SSB group index basis is proposed.

As in [Method #1], a transmission power value for each SSB index or SSB group index may be indicated by UE-specific DCI, UE group-common DCI, or cell-specific DCI, or by a UE-specific MAC CE, UE group-common MAC CE, or cell-specific MAC CE. When a transmission power value is indicated on a per-SSB index basis, a transmission power value for all SSB indexes or at least one SSB index included in set_A may be indicated. For example, Set_A may include all of a maximum number (e.g., L_max in the 3GPP TS 38.213 specification) of SSB indexes corresponding to a frequency resource where an SSB is transmitted or may include actually transmitted SSB (ATSS) indexes configured by a parameter *ssb-PositionsInBurst.*

For the transmission power values of the SSBs included in Set_A, an absolute value or an offset value from a transmission power corresponding to a specific SSB index may be indicated for each SSB index. For example, the absolute value of transmission power for each of all SSBs included in Set_A may be indicated, or the absolute value of transmission power for one of the SSBs included in Set_A and offset values for the remaining SSBs may be indicated. When the absolute value of transmission power for a specific SSB index and offset values for the remaining SSB indexes are indicated, the specific SSB index may be predetermined as the lowest or highest of the SSB indexes included in set_A, or the specific SSB index value may be pre-indicated by higher layer signaling or L1 signaling (e.g., DCI).

When the transmission power values for the SSBs included in Set_A are indicated by DCI or a MAC CE, a bit location in the DCI or MAC CE for the power value corresponding to each SSB index may be preconfigured/predefined.

When a transmission power value is indicated on a per-SSB group index basis, a similar rule may be applied. Specifically, grouping of all SSB indexes or at least one SSB index included in set_A may be predefined or preconfigured by higher layer signaling, and a transmission power value for each SSB group index or the at least one SSB group index may be indicated.

For the transmission power values, an absolute value or an offset value from a transmission power value corresponding to a specific SSB index or SSB group index may be indicated for each SSB group index. For example, the absolute value of transmission power for each of all SSB groups included in Set_A may be indicated, or the absolute value of transmission power for one of the SSB groups included in Set_A or for a specific SSB included in the SSB group and offset values for the remaining SSB groups may be indicated.

When an offset value from a transmission power value corresponding to a specific SSB group index or specific SSB index or is indicated, the specific SSB index or SSB group index may be predetermined as the lowest or highest of the SSB indexes or SSB group indexes included in set_A, or the specific SSB index or SSB group index may be pre-indicated by higher layer signaling.

When transmission power values for the SSB group indexes included in Set_A are indicated by DCI or a MAC CE, a bit location in the DCI or MAC CE for a power value for each SSB group index may be preconfigured/predefined.

To measure a DL path-loss value as in Table 3 above, the UE may need an SSB transmission power value and an RSRP (e.g., SS-RSRP) value that has passed L3 filtering.

For example, when a *referenceSignalPower* value is determined based on an *ss-PBCH-BlockPower* value, if information about a transmission power value for each SSB group index or SSB index is provided by a signal such as (group common) DCI or a MAC CE as in the proposed method, the UE may update the new *ss-PBCH-BlockPower* value to an SSB power value of a corresponding SSB group index or SSB index based on the indicated information. Further, the *referenceSignalPower* value and the DL path-loss value may also be updated based on this.

The UE may perform an SS-RSRP and/or SS-RSRQ and/or SS-SINR measurement to calculate the DL path-loss value. The measurement may correspond to an L3 measurement and/or L1 measurement.

In this case, values measured before the transmission power value corresponding to the SSB group index or SSB index is changed may not be used, and a measurement may be restarted or an L3 filter coefficient may be adjusted from a time when the transmission power value is changed, or a filter coefficient for a time point before/after the time when the transmission power value (e.g., *ss-PBCH-BlockPower*) is changed may be set and a corresponding RRM may be performed. The above operation may be performed on a per-SSB group index or per-SSB group basis.

Alternatively, information related to a time stamp for a time when the UE performs the measurement or starts filtering for the measurement may be included in a measurement report, and this operation may be performed on a per-SSB group index or per-SSB group basis.

The procedure may be equally extended to RRM for one or more neighbor cells as well as RRM for a serving cell. For one or more neighbor cells, information related to a transmission power value for an SSB group index or SSB index may be proposed by signaling such as (group common) DCI or MAC CE as in the proposed method. For example, when the information related to the transmission power value is indicated by SI, an SI change may be notified by an SI modification message of paging, and this operation may be performed on a per-SSB group index or per-SSB group basis.

According to the 3GPP TS 38.213 specification, when performing an RLM and/or link recovery procedure or BFD, the UE may determine whether a link quality is higher than or lower than a specific threshold based on a configured/defined DL signal. For example, in the case of the RLM, the UE may determine whether the link quality is higher than Q_in or lower than Q_out. Or in the case of the BFD, the UE may determine whether the link quality is higher than Q_in,LR or lower than Q_out,LR.

The UE may finally declare radio link failure or beam failure based on how many times the event has occurred (i.e., a counter value for the event) during a given time period (i.e., a timer period).

When a transmission power value may be dynamically changed on a per-SSB group index or per-SSB index basis, a threshold and/or a timer value and/or a counter value in the RLM/BFD procedure may also be adjusted (by a pre-agreement) based on a variation of the power value or offset value of a corresponding SSB group index or SSB index. For example, when a transmission power value (e.g., a *ss-PBCH-BlockPower* value) corresponding to a specific SSB group index or SSB index is signaled as 3dB to the UE, the UE may increase the threshold such as Q_in or Q_out or Q_in,LR or Q_out,LR by 3dB in performing SSB-based RLM or BFD.

For handover of a connected UE, a method may be considered in which a different handover threshold or offset value for a handover offset for a specific cell with changed SSB power is transmitted on a per-SSB group index or SSB index to the UE to appropriately trigger an event such as A1, A2, or A3 (i.e., events A1/A2/A3 defined in section 5.5.4 of 3GPP TS 38.331).

In a random access procedure, a different value of a backoff indicator may be configured according to SSB transmission power. The BS may indicate a backoff index value for a random access response (RAR), as in Table 7.2-1 of the 3GPP TS 38.321 specification, and when the UE recognizes failure in transmitting a physical random access channel (PRACH), the UE may perform a PRACH retransmission based on a backoff parameter value corresponding to the backoff index value after waiting for a specific period of time.

Further, when different transmission power may be configured on a per-SSB group index or per-SSB index basis, a different backoff index may be linked or a backoff parameter value corresponding to the same backoff index may be configured differently, according to a corresponding SSB transmission power value, SSB group index, or SSB index.

For example, when a plurality of UEs transmit PRACHs in an RACH occasion (RO) corresponding to an SSB with a high power value, the probability of collision between the PRACHs of the UEs increases. In this regard, a rule may be predetermined or preconfigured that a larger backoff parameter value or a backoff indicator corresponding to the larger backoff parameter value is linked to an SSB group index or SSB index with a higher power value.

Alternatively, when different transmission power may be configured on a per-SSB group index or per-SSB index basis, a different scaling factor value may be multiplied by a backoff parameter according to a corresponding SSB transmission power value, SSB group index, or SSB index. For example, in the case of different SSB transmission power values, SSB group indexes, or SSB indexes, different scaling factors may be configured/defined, with the same backoff indicator and/or the same backoff parameter value, so that a UE performing an RACH retransmission based on the product between a scaling factor and a backoff parameter determined based on a backoff indicator performs the RACH retransmission after waiting for a specific period of time.

A UE, which has attempted a PRACH transmission in an RO corresponding to SSB index #1, may reattempt the PRACH transmission in an RO corresponding to a different SSB index (e.g., SSB index #2) after recognizing that the PRACH transmission has failed. Whether the UE may change the SSB index may vary depending on power values configured/indicated for SSB index #1 and SSB index #2.

For example, when power value P2 corresponding to SSB index #2 is greater than power value P1 corresponding to SSB index #1, the UE may be allowed to change to SSB index #2 only if an RSRP_2 value from SSB index #2 is greater than an RSRP_1 value from SSB index #1 by a specific threshold (i.e., {RSRP_2 - RSRP_1} > threshold). This is done to control the collision probability in an RO corresponding to an SSB index with a high power value, and the specific threshold may be preconfigured/predefined or calculated by the UE or the BS based on the difference between P1 and P2. When the BS calculates the specific threshold, the BS may indicate the specific threshold to the UE by RRC signaling or by DCI or a MAC CE.

The UE may select a specific SSB index based on the reception quality of an SSB. For example, the UE may report an SSB index with a largest RSRP, RSRQ, or SINR value to the BS, or perform cell (re)selection based on the SSB index.

In this case, it may be considered that transmission power is different for each SSB group index or SSB index. For example, in the case where a power value corresponding to SSB index #1 is P1 and a power value corresponding to SSB index #2 is P2, and P1 is greater than P2, when an RSRP value measured from SSB index #1 is RSRP_1 and an RSRP value measured from SSB index #2 is RSRP_2, and {RSRP_1 - RSRP_2} > threshold, the UE may determine that the reception quality of SSB index #2 is better than that of SSB index #1. The threshold may be preconfigured/predefined or calculated by the UE or BS based on the difference between P1 and P2. When the BS calculates the threshold, the BS may indicate the threshold to the UE by RRC signaling or by DCI or a MAC CE.

**[Method #2] Method of controlling non-zero power (NZP) CSI-RS transmission power**

An existing UE may know the CSI-RS transmission power of each CSI-RS resource of a serving BS from a parameter *powerControlOffsetSSRRC.* Therefore, when the BS wants to modify the CSI-RS transmission power, the RRC parameter needs to be reconfigured. However, this process may involve a considerably large delay (e.g., tens of msec). To solve this problem, a method of more dynamically indicating a CSI-RS transmission power value for the purpose of saving the energy of the BS may be considered.

In a method, information about a CSI-RS transmission power value may be signaled by DCI or a MAC CE. Specifically, an offset value from SSB transmission power (i.e., an SSB power value set by *ss-PBCH-BlockPower* or an SSB power value to which [Method #1] is applied), such as in *powerControlOffsetSS* may be directly indicated by the DCI or MAC CE. Alternatively, an offset value (e.g., -3dB, 0dB, or +3dB) from a previous signaled *powerControlOffsetSS* may be indicated by the DCI or MAC CE.

Alternatively, the information about the CSI-RS transmission power may be indirectly provided by information such as antenna port or antenna element on/off, antenna port on/off, TRP on/off, or panel on/off of the BS by the DCI or MAC CE. For example, when it is indicated that the number of antenna ports or antenna elements is reduced by half, this may mean that the CSI-RS power value is decreased by 3dB.

Considering a processing time of the DCI or MAC CE at the UE and/or a processing time for changing the power value at the BS, there may be an issue as to when to apply the signaled CSI-RS power value. For this purpose, information about a time point when to apply the CSI-RS power may be directly provided by the DCI and/or MAC CE, or preconfigured or predefined. For example, it may be predefined that the changed CSI-RS power is applied k slots after a slot in which the DCI and/or MAC CE is received, and the value of k may be preset. Alternatively, for example, it may be defined that the changed CSI-RS power is applied at the first frame boundary after the reception time of the DCI and/or MAC CE, at the first SFN=0 after the reception time of the DCI and/or MAC CE, or at the start of the first SI modification period after the reception time of the DCI and/or MAC CE.

Considering a UE in an idle or inactive state, the information about the CSI-RS transmission power value and/or the information about the time of applying the power value may be provided by broadcast data such as a PDCCH scheduling SI and/or a PDSCH carrying SI and/or a PDSCH including paging DCI and/or a paging message or by DCI scheduling the broadcast data.

In the above method, the DCI or MAC CE by which the information about the CSI-RS transmission power value and/or the information about the time of applying the power value is provided may be transmitted UE-specifically, UE group-commonly, or cell-specifically. In the case of the DCI, it may be transmitted scrambled with a UE-specifically, UE group-commonly, or cell-specifically configured RNTI. In the case of the MAC CE, it may be transmitted through a PDSCH scheduled by DCI scrambled with the UE-specifically, UE group-commonly, or cell-specifically configured RNTI. In addition, the PDSCH may also be scrambled with the UE-specifically, UE group-commonly, or cell-specifically configured RNTI.

Further, a bit location in the DCI or MAC CE, which provides the information about the CSI-RS transmission power value and/or the information about the time of applying the power value, may be preconfigured. Further, a carrier/serving cell carrying the DCI or MAC CE may be different from a carrier/serving cell to which the information about the CSI-RS transmission power value is applied, and information about a CSI-RS transmission power value for a plurality of carriers/serving cells may be provided by the DCI or MAC CE. For example, information about a common CSI-RS transmission power value may be provided for a plurality of carriers/serving cells, or information about a different CSI-RS transmission power value may be provided for each carrier/serving cell.

As illustrated in Table 3, in order to measure a DL p path-loss value, the UE may need a CSI-RS transmission power value and an RSRP (particularly, CSI-RSRP) value that has passed layer 3 (L3) filtering. For example, when a *referenceSignalPower* value may be determined based on *powerControlOffsetSS,* if a *powerControlOffsetSS* value, an offset value from a previous signaled *powerControlOffsetSS,* or information about a CSI-RS SSB transmission power value may be provided by signaling such as (group common) DCI or a MAC CE as in the proposed method, the UE may update the new *powerControlOffsetSS* value based on the indicated value, and also update the *referenceSignalPower* value and the DL path-loss value based on the updated value.

The UE may perform a CSI-RSRP and/or CSI-RSRQ and/or CSI-SINR measurement to calculate the DL path-loss value. The measurement may correspond to an L3 measurement and/or L1 measurement.

In this case, values measured before the *powerControlOffsetSS* is changed may not be used, and the measurement may be restarted or an L3 filter coefficient may be adjusted from a time when the *powerControlOffsetSS* is changed, or a filter coefficient for a time point before/after the time when *powerControlOffsetSS* is changed may be set and a corresponding RRM may be performed.

Alternatively, information related to a time stamp for the time when the UE performs the measurement or starts filtering for the measurement may be included in a measurement report. The procedure may be equally extended to RRM for one or more neighbor cells as well as RRM for a serving cell.

For one or more neighbor cells, information about *a powerControlOffsetSS* value, an offset value from a previous signaled *powerControlOffsetSS,* or information about a CSI-RS transmission power value may be provided by signaling such as (group common) DCI or MAC CE as in the proposed method. For example, when the information about the power value or offset value is provided by SI, an SI change may be notified by an SI modification message of paging.

According to the 3GPP TS 38.213 specification, when performing an RLM and/or link recovery procedure or beam failure detection (BFD), the UE may determine whether a link quality is higher than or lower than a specific threshold based on a configured/defined DL signal. For example, in the case of the RLM, the UE may determine whether the link quality is higher than Q_in or lower than Q_out. Or in the case of the BFD, the UE may determine whether the link quality is higher than Q_in,LR or lower than Q_out,LR.

The UE may finally declare radio link failure or beam failure based on how many times the event has occurred (i.e., a counter value for the event) during a given time period (i.e., a timer period).

When an absolute value of CSI-RS transmission power or an offset value from a previous signaled *powerControlOffsetSS* or information about a CSI-RS transmission power value is provided by signaling such as (group-common) DCI or a MAC CE as in the proposed method to dynamically change a *powerControlOffsetSS* value, a threshold and/or a timer value and/or a counter value in the RLM/BFD procedure may also be adjusted (by a pre-agreement) based on a variation of the *powerControlOffsetSS* value. For example, when the offset from the *powerControlOffsetSS* value is signaled as 3dB to the UE, the UE may increase the threshold such as Q_in or Q_out or Q_in,LR or Q_out,LR by 3dB in performing SSB-based RLM or BFD.

For handover of a connected UE, a method may be considered in which a handover threshold or an offset value for a handover offset for a specific cell with changed CSI-RS power is transmitted to the UE to appropriately trigger an event such as A1, A2, or A3 (i.e., events A1/A2/A3 defined in section 5.5.4 of 3GPP TS 38.331).

In the Release 17 5G NR standard, the value range of the parameter *powerControlOffsetSS* is {-3, 0, 3, 6} dB. However, considering that an SSB transmission power value may be reduced for NES, an offset value greater than 6dB may be required. For example, the value range may be changed to {-3, 0, 4, 8} dB. For example, when the UE receives signaling informing that the BS has entered a power saving mode or is operating in the power saving mode, the value range may be changed, and the change of the value range may be separately configured/indicated.

Alternatively, considering that a smaller CSI-RS transmission power value than an SSB transmission power value is frequently used to save the energy of the BS, an offset value smaller than -3dB may be required. For example, the value range may be changed to {-6, -3, 0, 3} dB, and when the UE receives signaling informing that the BS has entered the power saving mode or is operating in the power saving mode, the value range may be changed, and the change of the value range may be separately set/indicated.

Alternatively, both the minimum and maximum values may be changed by combining the two motivations (or methods) described above. For example, the value range may be changed to {-4, 0, 4, 8} dB. When the UE receives signaling informing that the BS has entered the power saving mode or is operating in the power saving mode by signaling informing time-axis on/off and/or a change in the amount of frequency resources and/or power increase and decrease and/or antenna port on/off or TRP on/off in the spatial domain, the value range may be changed, and the change of the value range may be separately set/indicated.

A CSI-RS power value may be changed by signaling. In another method, however, the power value of the CSI-RS may be changed implicitly depending on the number of antenna ports to be turned off among antenna ports of the CSI-RS and/or the indexes of the turned-off antenna ports. Alternatively, the power value of the CSI-RS may be changed implicitly depending on the number of antenna ports or antenna elements, TRPs, or panels activated by the BS.

For example, for a 32-port NZP CSI-RS whose position is configured for each antenna port in one resource block (RB) and 14 symbols as illustrated in FIG. 12(a), the UE that receives a configuration/indication indicating turn-off of 16 antenna ports may perform 16-port NZP CSI-RS reception in the manner of FIG. 12(b) or FIG. 12(c) according to configuration information or a predefined/preconfigured rule.

When the transmission power of each CSI-RS antenna port is fixed, the UE may recognize that the CSI-RS transmission power is not changed in the case of FIG. 12(b) because an existing energy per resource element (EPRE) is maintained. In the case of FIG. 12(c), the UE may recognize that a transmission power change of -3dB compared to the existing one has occurred. In another method, when the number of antenna ports for a CSI-RS resource or CSI-RS resource set is changed, or the number of antenna ports, antenna elements, TRPs, or panels activated by the BS is changed, as illustrated in FIG. 12(b) or FIG. 12(c), an offset value of CSI-RS transmission power may be preconfigured/predefined according to each change method.

CSI-RS transmission power may also be changed according to the size of an actually activated bandwidth in a bandwidth part (BWP)/component carrier (CC). For example, when only 20MHz is turned on in a 40-MHz BWP, an offset of -3dB (i.e., by applying $10\log_{10}(20/40)$) may be implicitly applied to the CSI-RS transmission power. Alternatively, a variation value of the CSI-RS transmission power may be preconfigured according to the size of an actually activated bandwidth.

Similarly to RRM, when NZP CSI-RS transmission power configured for a CSI measurement is changed, a change in the corresponding CSI measurement method may be considered.

For example, the UE may perform a CSI measurement based on an NZP CSI-RS configured for channel measurement and/or interference measurement. In this case, time-axis measurement restriction may not be configured.

In this case, values measured before *powerControlOffsetSS* is changed may not be used, and averaging of measurements or CSI measurements may be restarted from a time when the *powerControlOffsetSS* is changed.

Alternatively, when the average of CSI measurement values is calculated, the CSI measurements may also be performed on CSI-RSs with changed transmission power values by applying an appropriate weighting factor to the changed CSI-RS transmission power values. For example, when CSI averaging is performed on CSI-RSs including a CSI-RS boosted by 3dB, a CSI measurement may be performed by applying half of the weighting factor to the CSI-RS. In other words, for averaging, a weighting factor of 1 may be applied to a CSI measurement in a CSI-RS before the transmission power value has been changed, and a weighting factor based on the changed transmission power value may be applied to a CSI measurement after the transmission power value has been changed.

Alternatively, information related to a time stamp for a time when the UE performs a measurement or starts averaging of measurements may be included in a measurement report.

The above-described method of performing a CSI measurement may also be applied, when the BS notifies the UE that it has entered the power saving mode or is operating in the power saving mode by signaling informing time-axis on/off and/or a change in the amount of frequency resources and/or power increase/decrease and/or antenna port on/off or TRP on/off in the spatial domain, and the UE also recognizes this.

Further, the above-described method may be applied not only when there is a change in CSI-RS power, but also when at least one of the time domain, frequency domain, or spatial domain of a CSI measurement is changed. For example, when a CSI measurement window is changed, CSI may be measured again after the change, or CSI may be measured in consideration of a predetermined weighting factor after the change and then averaged with a CSI measurement before the change.

Further, when a frequency band or spatial domain for a CSI measurement or the power value of a corresponding NZP CSI-RS is changed, post-change CSI may be measured again, or the post-change CSI may be measured in consideration of a predetermined weighting factor and then averaged with a pre-change CSI measurement.

In the case where some antenna ports are turned off to reduce power consumption of the BS and there is no CSI report corresponding to the antenna ports, when the BS reactivates the deactivated antenna ports due to an increase in data to be transmitted, the BS may not be able to identify appropriate CSI for transmitting the data.

In consideration of this, the UE may by default have to receive a CSI-RS resource or CSI-RS resource set for which all antenna ports are activated, and perform CSI reporting even for a relatively long period, rather than only a CSI-RS with some antenna ports deactivated or a CSI-RS resource or CSI-RS resource set with a small number of antenna ports is operated.

Therefore, a rule may be set so that a CSI-RS resource or CSI-RS resource set and corresponding CSI reporting for the default mode are configured, and the default mode always operates regardless of it is indicated that the BS enters the power saving mode or is operating in the power saving mode by signaling informing time-axis on/off and/or a change in the amount of frequency resources and/or power increase/decrease and/or antenna port on/off or TRP on/off in the spatial domain.

**[Method #2-1] Method of controlling NZP CSI-RS transmission power, when different transmission power may be set/indicated on a per-SSB group index or per-SSB index basis**

When different transmission power may be configured/indicated on a per-SSB group index or per-SSB index basis as in the above [Method #1-1], an SSB index or SSB group index that serves as a reference may be determined in setting the transmission power value of an NZP-CSI-RS.

For example, when an offset value from an SSB transmission power value may be configured by the parameter *powerControlOffsetSS,* an SSB group index or SSB index that serves as a reference or an SSB transmission power value may be required.

That is, CSI-RS transmission power may be determined based on the specific SSB group index or SSB index, and the SSB group index or SSB index may be set by higher layer signaling or predefined as a lowest or highest SSB index or a lowest or highest SSB group index. Alternatively, it may be predefined as the lowest or highest SSB index or the lowest or highest SSB group index among actually transmitted SSBs (ATSSs). Alternatively, it may be defined as an SSB index corresponding to a QCL source of the NZP-CSI-RS or a SSB group index including the SSB index. In this case, when a source RS of the NZP-CSI-RS is a signal/channel other than an SSB, the QCL source RS of the signal/channel may be continuously tracked so that a final source RS (i.e., final SSB) may be determined as the SSB group index or SSB index for determining the CSI-RS transmission power.

As in the above [Method #2], information about a CSI-RS transmission power value may be signaled by DCI or a MAC CE, or may be indirectly provided by providing to the UE information about antenna port or antenna element on/off or antenna port on/off or TRP on/off or panel on/off by DCI or a MAC CE. Even in this case, an SSB group index or SSB index that serves as a reference for signaling the CSI-RS transmission power value may need to be determined. In other words, the CSI-RS transmission power value may be determined based on the specific SSB group index or SSB index, and the SSB group index or SSB index may be configured by higher layer signaling or predefined as a lowest or highest SSB index or a lowest or highest SSB group index. Alternatively, it may be predefined as a lowest or highest SSB index or a lowest or highest SSB group index among the ATSSs. Alternatively, it may be defined as an SSB index corresponding to a QCL source of the NZP-CSI-RS or a SSB group index including the SSB index. In this case, when a source RS of the NZP-CSI-RS is a signal/channel other than an SSB, the QCL source RS of the signal/channel may be continuously tracked so that a final source RS (i.e., final SSB) may be determined as the SSB group index or SSB index for determining the CSI-RS transmission power.

As in the above [Method #1], [Method #1-1], [Method #2], and [Method #2-1], the method of controlling the transmission power of an SSB and/or a CSI-RS may be applied only when an NES state is indicated, only when a specific DRX configuration is indicated or applied, only when switching to a specific BWP is performed, or only within a DRX active time (or outside the DRX active time) when DRX is configured. In this case, the DRX active time may mean a time period during which an onDurationtimer and/or an inacitivitytimer is running, or a time period during which the UE should be awake for transmission and/or reception.

According to [Method #1] and [Method #2], because the transmission power of an NZP CSI-RS and/or an SSB is dynamically changed and a measurement is performed by considering the dynamically changed transmission power, the power consumption of the BS may be reduced, and an efficient channel measurement may be enabled without being affected by the dynamically changed power value.

**[Method #3] Method of receiving data by using an enhanced reception technique such as (digital) post distortion at a UE to improve DL data reception performance**

When the BS may be aware that the UE is capable of a compensation technique such as (digital) post distortion, the BS may transmit DL data only with a lower power value to the advanced UE. Accordingly, the probability of a power amplifier (PA) of the BS operating in a non-linear region may be decreased, which may contribute to reduction of power consumption.

The compensation technique such as post-distortion may include, for example, a technique proposed in H. Bouhadda, R. Zayani, H. Shaiek, D. Roviras, and R. Bouallegue, "Receiver Technique for Detection and Correction of Nonlinear High Power Amplifier Distortion Errors in OFDM Systems," 2015 IEEE 81st Vehicular Technology Conference (VTC Spring), 2015, pp. 1-5.

The above proposed technique is a reception technique for compensating for non-linear high power amplifier distortion in an orthogonal frequency division multiplexing (OFDM) system.

The reception technique is for detecting non-linearly distorted symbols among symbols received by a receiver (e.g., a UE) in an OFDM transmission system. According to this method, the location of an erroneous symbol is determined, and an actual symbol is iteratively substituted into a specific simultaneous equation until the error of the symbol is corrected based on the Bussgang theorem application and fast Fourier transform (FFT) (i.e., the symbol returns to a signal before it was distorted). In the numerical performance evaluation of the above method, it has been verified that a significant reception performance improvement is possible compared to an existing receiver.

The performance of a UE capable of a compensation technique such as the post distortion described above may be referred to as an advanced DL reception capability. Further, the reception method of the UE to which the advanced DL reception capability is applied may be referred to as an advanced DL reception method.

When it is possible to indicate information as to whether a PA driven by the BS operates in a linear region or a non-linear region, the UE may apply the advanced DL reception method when receiving a linked DL signal/channel based on the information.

Further, the information may be provided by DCI that schedules or activates the DL signal/channel. In this case, when the UE receives the DCI, the UE may have to apply the advanced DL reception method in receiving the DL signal/channel scheduled or activated by the DCI, or satisfy an expected reception requirement in applying the advanced DL reception method.

Alternatively, a time period during which the advanced DL reception method is applied may be indicated by (group-common) DCI or a MAC CE, and when the UE receives the indication, the UE may apply the advanced DL reception method in receiving a DL signal/channel during the indicated time period, or satisfy an expected reception requirement expected in applying the advanced DL reception method.

Alternatively, it may be separately configured/indicated that the advanced DL reception method should be applied. Only when a specific condition (e.g., an MCS and/or the number of layers) is satisfied, the advanced DL reception method may have to be applied in receiving the DL signal/channel, or the expected reception requirement may have to be satisfied in applying the advanced DL reception method.

When the UE applies the advanced DL reception method, a time required to process the received DL signal/channel may increase compared to existing processing. In consideration of this, when the UE applies the advanced DL reception method, the existing processing time may be relaxed.

For example, a processing time of N1 symbols (e.g., N1 is a PDSCH-to-HARQ-ACK timing) may be increased by d_x (e.g., d_x=1 symbol). The d_x value may vary depending on the number of layers of a PDSCH received by the UE. This is because the processing complexity of the UE may increase as the number of layers increases. For example, when the number of layers is equal to or less than a specific threshold, it may be defined that d_x=K1 symbols, and when the number of layers is greater than the specific threshold, it may be defined that d_x=K2 (>K1) symbols. K2 is larger than K1.

To apply the advanced DL reception method, the UE should be able to obtain PA information such as a method of installing a PA at the BS or an input power to output power curve of the PA. To this end, the BS may inform the UE of the PA information. For example, the PA information may be information such as information regarding whether a PA is configured for each antenna port or antenna element or for each panel. Alternatively, the BS may indirectly inform the UE of the power curve of the PA by intensively transmitting DL signals with different transmission powers during a specific time period.

For example, a total of 7 symbols of a CSI-RS may be configured at 2-symbol intervals within 14 symbols of specific slot n, and CSI-RS transmission power for each symbol may be preconfigured. For example, first CSI-RS transmission power may be set to 8dBm, and a power boost may be set at 1-dB intervals. Accordingly, last 7th CSI-RS transmission power may be 14dBm. In this case, the UE may indirectly derive the power curve of the PA of the BS from the reception of the CSI-RS in the 7 symbols, and perform the advanced DL reception method through the curve.

According to [Method #3], even when the power consumption of the BS is reduced, the DL reception performance may be maintained uniformly.

### [Method #4] Method of defining UE assistance information indicating a UE preference for BS power and transmitting the information to a BS by a UE

When the power of a PDSCH received by the UE at a specific time point is sufficiently large or small, the UE may report its preferred offset value. For example, upon receipt of a specific PDSCH, when the UE determines that the same reception success rate is guaranteed with power XdB lower or higher than that of the PDSCH, the UE may report the X value to the BS.

The BS may transmit the PDSCH to the UE with lower or higher power based on the reported X value, thereby reducing power consumption or ensure stable PDSCH reception. When the BS configures the UE to report an X value, the UE may periodically report the X value through a UL signal/channel such as a PUCCH or PUSCH. Alternatively, the UE may aperiodically transmit an event-triggered report through a UL signal/channel such as a PUCCH or PUSCH, only when the X value is greater than or less than a preset/predefined threshold.

The UE may inform the BS of a power margin to inform the BS that when the BS further lowers the transmission power of a DL signal such as an SSB, the UE may not attach to a cell. In other words, the UE may inform the BS of a power margin for the purpose of warning that when the BS lowers the transmission power of a DL signal such as an SSB, the UE may have to perform handover or radio link failure (RLF) or beam failure detection (BFD) may be triggered.

For example, to inform the BS that when the BS lowers SSB transmission power by Y dB, the UE may not stably attach to the cell, and thus the UE may have to perform handover or RLM of BFD may be triggered, as judged by the UE, the UE may report the Y value to the BS periodically or aperiodically through a PUSCH or PUCCH.

The UE assistance information proposed in the above method or the UE assistance information (e.g., a maximum aggregated bandwidth, a maximum number of CCs, or a maximum number of MIMO layers) supported in Rel-17 may be transmitted to the BS by an RRC message or by a MAC CE or L1 message.

According to [Method #4], the BS may determine whether to reduce power and the degree of power reduction based on the reception performance of a DL signal and a connection status between the UE and the BS, thereby reducing the overall power consumption of the BS while enabling stable signal transmission and reception.

**[Method #5] Method of differently applying an RS for path loss measurement and/or a DL RS required for performing RLM/BFD, based on signaling that a BS has entered a power saving mode or is operating in the power saving mode by signaling such as time-axis on/off and/or a change in the amount of frequency resources and/or power increase/decrease and/or antenna port on/off or TRP on/off in the spatial domain, and/or signaling informing antenna port or antenna element on/off or antenna port on/off or TRP on/off or panel on/off of the BS by DCI or a MAC CE, and/or signaling indicating that the power amount of a DL signal (e.g., CSI-RS or SSB) of the BS has been changed by DCI or a MAC CE**

For example, two configurations for an RS for path loss measurement and a DL RS required for performing RLM/BFD may be configured for the UE. The UE may perform UL power control based on the RS for power loss measurement or an RLM/BFD operation based on the DL RS by applying configuration #1 when the BS is in the power saving mode, and otherwise applying configuration #2.

In another example, a different maximum number of the DL RSs required for performing RLM/BFD may be configured depending on whether the BS is in the power saving mode or not. Specifically, when the BS is in the power saving mode, the UE may perform the RLM/BFD operation based on up to 2 DL RSs, and when the BS is not in the power saving mode, the UE may perform the RLM/BFD operation based on up to 4 DL RSs.

According to [Method #5], the amount of power allocated per DL RS may be kept constant by changing a DL RS received by the UE and an RLM/RFD operation of the UE depending on whether the BS is in the power saving mode, and the number of antenna ports to which the DL RS is allocated may be adjusted by varying the amount of the DL RS depending on the number of turned-on antenna ports, thereby enabling efficient DL transmission.

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

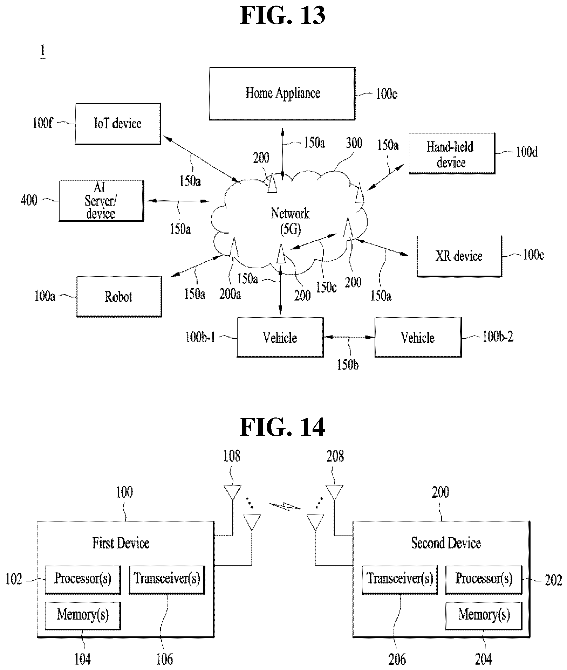

FIG. 13 illustrates a communication system 1 applied to the disclosure.

Referring to FIG. 13, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

FIG. 14 illustrates wireless devices applicable to the disclosure.

Referring to FIG. 14, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, instructions and/or operations, controlled by the processor 102 of the first wireless device 100 and stored in the memory 104 of the first wireless device 100, according to an embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 102 may receive an RRC parameter for transmission power related to a DL signal through the transceiver 106. For example, the RRC parameter may be a parameter related to transmission power of an SSB and/or a parameter related to transmission power of a CSI-RS.

The processor 102 may receive DCI or a MAC CE for power control related to the DL signal through the transceiver 106. In addition, the processor 102 may receive the DL signal through the transceiver 106. In addition, the processor 102 may report measurement information related to the DL signal through the transceiver 106.

The above DL signal may be an SSB and/or a CSI-RS and/or a PDSCH.

When the DL signal is an SSB and/or a CSI-RS, the above operation of the processor 102 may be based on at least one of [Method #1] to [Method #5].

When the DL signal is a PDSCH, the above operation of the processor 102 may be based on at least one of [Method #3] or [Method #4]. For example, in this case, the processor 102 may skip the reception of the RRC parameter and the reception of the DCI or MAC CE. In addition, the measurement information reported by the processor 102 may be a report related to the power of the PDSCH.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an embodiment of the disclosure will be described.

Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 202 may transmit an RRC parameter for transmission power related to a DL signal through the transceiver 206. For example, the RRC parameter may be a parameter related to transmission power of an SSB and/or a parameter related to transmission power of a CSI-RS.

The processor 202 may transmit DCI or a MAC CE for power control related to the DL signal through the transceiver 206. In addition, the processor 202 may transmit the DL signal through the transceiver 206. In addition, the processor 202 may receive measurement information related to the DL signal through the transceiver 206.

The above DL signal may be an SSB and/or a CSI-RS and/or a PDSCH.

When the DL signal is an SSB and/or a CSI-RS, the above operation of the processor 202 may be based on at least one of [Method #1] to [Method #5].

When the DL signal is a PDSCH, the above operation of the processor 202 may be based on at least one of [Method #3] or [Method #4]. For example, in this case, the processor 202 may skip the transmission of the RRC parameter and the transmission of the DCI or MAC CE. In addition, the measurement information reported by the processor 202 may be a report related to the power of the PDSCH.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

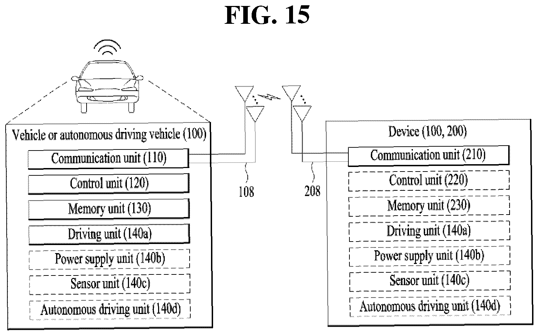

FIG. 15 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighbor vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**[Industrial Applicability]**

While the above-described method of transmitting and receiving reference signals for channel state information and the apparatus therefor have been described based on an example applied to a 5G NR system, the method and apparatus are applicable to various wireless communication systems in addition to the 5G NR system.

**Claims**

1. A method of measuring channel state information (CSI) by a user equipment (UE) in a wireless communication system, the method comprising:

   receiving first information related to first transmission power of a channel state information - reference signal (CSI-RS);
   receiving the CSI-RS; and
   starting measurement of first CSI based on the first transmission power and the CSI-RS,
   wherein based on receiving second information related to second transmission power of the CSI-RS having a different value from the first transmission power, second CSI is measured based on the CSI-RS and the second transmission power.

2. The method according to claim 1, wherein the measurement of the first CSI is ignored based on the measurement of the second CSI.

3. The method according to claim 1, wherein the second CSI is measured based on a weighting factor corresponding to the second transmission power.

4. The method according to claim 1, wherein the second CSI is transmitted together with a time stamp for a time point when the measurement of the second CSI starts.

5. The method according to claim 1, wherein the second information is applied at a time point before the measurement of the first CSI is completed.

6. The method according to claim 1, wherein the second transmission power is determined based on the first transmission power and the number of antenna ports turned on by a base station (BS).

7. A user equipment (UE) for measuring channel state information (CSI) in a wireless communication system, the UE comprising:

   at least one transceiver;
   at least one processor; and
   at least one memory operably connected to the at least one processor, and storing instructions which when executed, cause the at least one processor to perform operations,
   wherein the operations include:

receiving first information related to first transmission power of a channel state information-reference signal (CSI-RS) through the at least one transceiver;

receiving the CSI-RS through the at least one transceiver; and

starting measurement of first CSI based on the first transmission power and the CSI-RS, and wherein based on receiving second information related to second transmission power of the CSI-RS having a different value from the first transmission power, second CSI is measured based on the CSI-RS and the second transmission power.

8. The UE according to claim 7, wherein the measurement of the first CSI is ignored based on the measurement of the second CSI.

9. The UE according to claim 7, wherein the second CSI is measured based on a weighting factor corresponding to the second transmission power.

10. The UE according to claim 7, wherein the second CSI is transmitted together with a time stamp for a time point when the measurement of the second CSI starts.

11. The UE according to claim 7, wherein the second information is applied at a time point before the measurement of the first CSI is completed.

12. The UE according to claim 7, wherein the second transmission power is determined based on the first transmission power and the number of antenna ports turned on by a base station (BS).

13. An apparatus for measuring channel state information (CSI) in a wireless communication system, the apparatus comprising:

at least one processor; and

at least one memory operably connected to the at least one processor, and storing instructions which when executed, cause the at least one processor to perform operations,

wherein the operations include:

receiving first information related to first transmission power of a channel state information-reference signal (CSI-RS);

receiving the CSI-RS; and

starting measurement of first CSI based on the first transmission power and the CSI-RS, and wherein based on receiving second information related to second transmission power of the CSI-RS having a different value from the first transmission power, second CSI is measured based on the CSI-RS and the second transmission power.

14. A computer-readable storage medium including at least one computer program causing at least one processor to perform operations,

wherein the operations include:

receiving first information related to first transmission power of a channel state information-reference signal (CSI-RS);

receiving the CSI-RS; and

starting measurement of first CSI based on the first transmission power and the CSI-RS, and wherein based on receiving second information related to second transmission power of the CSI-RS having a different value from the first transmission power, second CSI is measured based on the CSI-RS and the second transmission power.

15. A method of receiving channel state information (CSI) by a base station (BS) in a wireless communication system, the method comprising:

transmitting first information related to first transmission power of a channel state information-reference signal (CSI-RS);

transmitting the CSI-RS;

transmitting second information related to second transmission power of the CSI-RS having a different value from the first transmission power; and
receiving the CSI based on the CSI-RS,
wherein the CSI includes measurement information based on the CSI-RS and the second transmission power.

**16.** A base station (BS) for receiving channel state information (CSI) in a wireless communication system, the BS comprising:

at least one transceiver;
at least one processor; and
at least one memory operably connected to the at least one processor, and storing instructions which when executed, cause the at least one processor to perform operations,
wherein the operations include:

transmitting first information related to first transmission power of a channel state information-reference signal (CSI-RS) through the at least one transceiver;
transmitting the CSI-RS through the at least one transceiver;
transmitting second information related to second transmission power of the CSI-RS having a different value from the first transmission power through the at least one transceiver; and
receiving the CSI based on the CSI-RS through the at least one transceiver, and
wherein the CSI includes measurement information based on the CSI-RS and the second transmission power.

# FIG. 1

**FIG. 2**

## FIG. 3

Beamforming Tx at TRP

## FIG. 4

# FIG. 5

UE                  BS

CSI-Resource config IE
(CSI-SSB-Resource Set List)    S510

SSB resource    S520

Beam report(best SSBRI and RSRP)    S530

# FIG. 6

Repetition
"on"

Repetition
"off"

CRI feedback

Resource #0
Resource #1
Resource #2

(a)                (b)

# FIG. 7

UE                      BS

NZP CSI-RS resource set IE — S710

CSI resource(s) configured with repetition 'ON' through same Tx beam — S720

| Determine Rx beam | — S630

Omit CSI reporting (no report) — S740

(a)

UE                      BS

NZP CSI-RS resource set IE — S750

CSI resouece(s) configured with repetition 'OFF' through different Tx beam — S760

| Determine best beam | — S770

CSI report (CRI / RSRP) — S780

(b)

# FIG. 8

Repetition "on"

Repetition "off"

0  1  2  3  4  5  6  7  8  9  10  11  12  13

frequency domain

Resource #0

Resource #1

Resource #2

RX beam sweeping

TX beam sweeping

time domain

# FIG. 9

| | |
|---|---|
| Receive RRC parameter for transmission power related to DL signal | S901 |
| Receive DCI (or MAC CE) for power control related to DL signal | S903 |
| Receive DL signal | S905 |
| Report measurement information related to DL signal | S907 |

# FIG. 10

Transmit RRC parameter for transmission power related to DL signal — S1001

Transmit DCI (or MAC CE) for power control related to DL signal — S1003

Transmit DL signal — S1005

Receive measurement information related to DL signal — S1007

# FIG. 11

UE                                                                BS

Transmit RRC parameter for transmission power related to DL signal — S1101

Transmit DCI (or MAC CE) for power control related to DL signal — S1103

Transmit DL signal — S1105

Report measurement information related to DL signal — S1107

# FIG. 12

(a)

(b)

(c)

# FIG. 13

# FIG. 14

# FIG. 15

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108      208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2023/004649** |

### A. CLASSIFICATION OF SUBJECT MATTER

**H04W 52/02**(2009.01)i; **H04W 52/14**(2009.01)i; **H04W 52/24**(2009.01)i; **H04W 72/23**(2023.01)i; **H04B 7/06**(2006.01)i; **H04B 7/08**(2006.01)i; **H04W 72/04**(2009.01)i; **H04W 24/08**(2009.01)i

According to International Patent Classification (IPC) or to both national classification and IPC

### B. FIELDS SEARCHED

Minimum documentation searched (classification system followed by classification symbols)

H04W 52/02(2009.01); H04B 17/309(2015.01); H04B 7/04(2006.01); H04B 7/06(2006.01); H04W 72/00(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI-RS(Channel State Information – Reference Signal), 전송 전력(transmission power), 측정(measurement), 가중치(weight factor), 타임 스탬프(time stamp), 안테나 포트(antenna port)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0071470 A (SAMSUNG ELECTRONICS CO., LTD.) 16 June 2021 (2021-06-16)<br>See paragraphs [0177], [0193]-[0194], [0262] and [0277]; and claims 5-6 and 14-15. | 1-3,5,7-9,11,13-16 |
| Y | | 4,10 |
| A | | 6,12 |
| Y | KR 10-2015-0058471 A (INTERDIGITAL PATENT HOLDINGS, INC.) 28 May 2015 (2015-05-28)<br>See paragraph [0083]. | 4,10 |
| A | WO 2021-023130 A1 (HUAWEI TECHNOLOGIES CO., LTD.) 11 February 2021 (2021-02-11)<br>See claims 1-7. | 1-16 |
| A | KR 10-2020-0004352 A (OFINNO, LLC) 13 January 2020 (2020-01-13)<br>See paragraphs [0538]-[0541]. | 1-16 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 July 2023** | **20 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004649**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2011-0083445 A (SAMSUNG ELECTRONICS CO., LTD.) 20 July 2011 (2011-07-20)<br>      See paragraphs [0046]-[0063]. | 1-16 |

Form PCT/ISA/210 (second sheet) (July 2022)

## INTERNATIONAL SEARCH REPORT
### Information on patent family members

International application No.

**PCT/KR2023/004649**

| Patent document cited in search report | | | Publication date (day/month/year) | Patent family member(s) | | | Publication date (day/month/year) |
|---|---|---|---|---|---|---|---|
| KR | 10-2021-0071470 | A | 16 June 2021 | EP | 4064600 | A1 | 28 September 2022 |
| | | | | US | 2023-0031806 | A1 | 02 February 2023 |
| | | | | WO | 2021-112622 | A1 | 10 June 2021 |
| KR | 10-2015-0058471 | A | 28 May 2015 | CN | 104737465 | A | 24 June 2015 |
| | | | | CN | 104737465 | B | 04 May 2018 |
| | | | | EP | 2901569 | A1 | 05 August 2015 |
| | | | | EP | 2901569 | B1 | 08 March 2023 |
| | | | | HK | 1213377 | A1 | 30 June 2016 |
| | | | | IL | 237939 | A | 31 May 2015 |
| | | | | IL | 237939 | B | 31 March 2019 |
| | | | | IN | 2516DEN2015 | A | 11 September 2015 |
| | | | | JP | 2016-500942 | A | 14 January 2016 |
| | | | | MY | 178618 | A | 19 October 2020 |
| | | | | TW | 201419786 | A | 16 May 2014 |
| | | | | TW | I750107 | B | 21 December 2021 |
| | | | | US | 2014-0093005 | A1 | 03 April 2014 |
| | | | | US | 2017-0257153 | A1 | 07 September 2017 |
| | | | | US | 9680538 | B2 | 13 June 2017 |
| | | | | US | 9979446 | B2 | 22 May 2018 |
| | | | | WO | 2014-052879 | A1 | 03 April 2014 |
| WO | 2021-023130 | A1 | 11 February 2021 | CN | 112312574 | A | 02 February 2021 |
| | | | | EP | 4009728 | A1 | 08 June 2022 |
| | | | | US | 2022-0159689 | A1 | 19 May 2022 |
| KR | 10-2020-0004352 | A | 13 January 2020 | CA | 3061962 | A1 | 08 November 2018 |
| | | | | CN | 110915271 | A | 24 March 2020 |
| | | | | EP | 3527009 | A1 | 21 August 2019 |
| | | | | EP | 3527009 | B1 | 29 April 2020 |
| | | | | EP | 3697140 | A1 | 19 August 2020 |
| | | | | JP | 2020-519172 | A | 25 June 2020 |
| | | | | JP | 7191438 | B2 | 19 December 2022 |
| | | | | US | 10477577 | B2 | 12 November 2019 |
| | | | | US | 11234268 | B2 | 25 January 2022 |
| | | | | US | 2018-0324853 | A1 | 08 November 2018 |
| | | | | US | 2020-0146057 | A1 | 07 May 2020 |
| | | | | WO | 2018-204887 | A1 | 08 November 2018 |
| | | | | WO | 2018-204887 | A4 | 31 January 2019 |
| KR | 10-2011-0083445 | A | 20 July 2011 | CN | 102792621 | A | 21 November 2012 |
| | | | | CN | 102792621 | B | 12 August 2015 |
| | | | | CN | 104993911 | A | 21 October 2015 |
| | | | | CN | 104993911 | B | 26 March 2019 |
| | | | | EP | 2524455 | A2 | 21 November 2012 |
| | | | | EP | 2524455 | B1 | 05 October 2016 |
| | | | | EP | 2985931 | A1 | 17 February 2016 |
| | | | | JP | 2013-517661 | A | 16 May 2013 |
| | | | | JP | 2015-164326 | A | 10 September 2015 |
| | | | | JP | 5730905 | B2 | 10 June 2015 |
| | | | | JP | 5985696 | B2 | 06 September 2016 |
| | | | | KR | 10-1831637 | B1 | 23 February 2018 |
| | | | | KR | 10-2017-0081618 | A | 12 July 2017 |
| | | | | US | 10122497 | B2 | 06 November 2018 |

Form PCT/ISA/210 (patent family annex) (July 2022)

**INTERNATIONAL SEARCH REPORT**
Information on patent family members

International application No.

**PCT/KR2023/004649**

| Patent document cited in search report | Publication date (day/month/year) | Patent family member(s) | | | Publication date (day/month/year) |
|---|---|---|---|---|---|
| | | US | 10623144 | B2 | 14 April 2020 |
| | | US | 11431442 | B2 | 30 August 2022 |
| | | US | 2011-0170435 | A1 | 14 July 2011 |
| | | US | 2014-0126668 | A1 | 08 May 2014 |
| | | US | 2015-0124758 | A1 | 07 May 2015 |
| | | US | 2018-0048428 | A1 | 15 February 2018 |
| | | US | 2019-0074932 | A1 | 07 March 2019 |
| | | US | 2020-0244400 | A1 | 30 July 2020 |
| | | US | 8634363 | B2 | 21 January 2014 |
| | | US | 9077519 | B2 | 07 July 2015 |
| | | US | 9800373 | B2 | 24 October 2017 |
| | | WO | 2011-087252 | A2 | 21 July 2011 |
| | | WO | 2011-087252 | A3 | 01 December 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. BOUHADDA** ; **R. ZAYANI** ; **H. SHAIEK** ; **D. ROVIRAS** ; **R. BOUALLEGUE**. Receiver Technique for Detection and Correction of Nonlinear High Power Amplifier Distortion Errors in OFDM Systems. *2015 IEEE 81st Vehicular Technology Conference (VTC Spring)*, 2015, 1-5